# EUROPEAN PATENT APPLICATION

(11) **EP 2 963 602 A1**
(43) Date of publication of application: **06.01.2016**
(21) Application number: 15172440.8
(22) Date of filing: 16.06.2015
(51) Int. Cl.: G06Q 10/10, G06Q 10/06

(54) **SYSTEM AND METHOD FOR PROVIDING AN ONLINE KNOWLEDGE PRODUCT**

(30) Priority: 03.07.2014 IN DE18012014
(71) Applicant: Evalueserve.com Pvt. Ltd., Gurgaon-122002 Haryana (IN)
(72) Inventor: VOLLENWEIDER, Marc, 9711 Paternion (AT)
(74) Representative: Lawrence, John

(57) **Abstract**

Various aspects of a system and method for providing an online knowledge product. The system, implemented in a server (104) communicatively coupled to an electronic device (102), comprises one or more processors (202, 302) operable to receive a request from the electronic device (102) associated with a first user (112). The request comprises a request order and one or more user preferences. One or more knowledge models are selected from one or more pre-stored knowledge models based on the received request. The one or more pre-stored knowledge models are generated based on one or more previous requests. The one or more previous requests are similar to at least a portion of the received request. The one or more processors (202, 302) further determine a first knowledge product based on the selected one or more knowledge models. An input from a second user on the determined first knowledge product is received to determine a second knowledge product. The selected one or more knowledge models are updated based on the determined second knowledge product so that a subsequent first knowledge product is substantially similar to the determined second knowledge product for a next request similar to the received request.

## Description

### CROSS-REFERENCE TO RELATED APPLICATIONS/INCORPORATION BY REFERENCE

This application makes reference to, claims priority to, and claims the benefit of Indian Provisional Application Serial No. 1801/DEL/2014 filed on July 03, 2014.

### FIELD

This invention relates to a system and method for providing an online knowledge product. More specifically, various embodiments of the disclosure relate to a platform to providing an online knowledge product with a non-linear and viral growth potential.

### BACKGROUND

Major developments were witnessed in the information and knowledge processing industry in the past decade. Typically, in accordance with existing service models, an information requestor, such as a customer, may place a request for proposal (RFP) for a project. In response to the RFP, the customer may receive multiple proposals from multiple vendors. Based on price quotes from the multiple vendors, the customer may assign the project to one of the multiple vendors.

From the customer's perspective, the turnaround time for the project may not be the best, in certain scenarios, due to lack of dedicated resources or full-time equivalents (FTEs). Further, the existing service models may have restrictions with regard to non-reusability of data/information across different projects from different requestors. In addition, the overall project cost may not be very attractive for small entities or one-time requestors. Also, from the vendor's perspective, a huge market, which remains untapped even after incorporating various service models, still exists. One of the reasons may be that such service models are typically based on economies of scale and may not be profitable due to low volume or short project duration. Accessing the latest, updated, and accurate business insights on a near-real-time basis may also be a significant challenge for many corporations, and a significant market exists to solve this business issue effectively.

US Patent No. US8666845 (hereinafter referred to as '845), discloses computer-implemented methods, computer-readable mediums, and distributed systems for managing consistent interfaces for a customer requirement business object across heterogeneous systems. '845 describes an overall structure of a business object model in a knowledge management system that ensures consistency of the interfaces that are derived from the business object model. A limitation of the business object model, as disclosed in '845 is that the latest, updated, cost-efficient, and accurate custom business insights may not be delivered and shared with the customer on a near-real-time basis.

WIPO Publication No. WO2001052095A2 (hereinafter referred to as '095) discloses a system, method, and article of manufacture for improving an existing application infrastructure of an application service provider. '095 describes a framework that is a collection of cooperating classes that make up a reusable design solution for a given problem domain. The disclosure '095 further describes templates and wizards that may reduce some development time in robust e-commerce applications and Java applets that may add "interactive content" to web documents. A limitation of the framework, as disclosed in '095 is that the latest, updated, cost-efficient, and accurate custom business insights may not be delivered and shared with a customer on a near-real-time basis.

US Patent No. US8478616 (hereinafter referred to as '616) discloses a business application development environment and a corresponding business application execution environment. '616 describes a business object service that provides services to allow a business application to directly interact with business objects and a dashboard application that provides real-time reporting on screen. '616 discloses that an analyst may use and add to a knowledge base as a part of incident management. A limitation of the business application development environment disclosed in '616 is that the latest, updated, cost-efficient, and accurate custom business insights may not be delivered and shared with a customer on a near-real-time basis.

US Publication No. US20120136684 (hereinafter referred to as '684) discloses a fast, dynamic, data-driven report deployment of data mining and predictive insight into business intelligence (BI) tools. '684 describes a Business Intelligence (BI) meta model template that is selected based on one or more meta model object types in a model structure to generate a BI meta model. One or more BI report specification templates are selected based on a mining model type. The BI meta model and the BI report specification are deployed to a BI server for use in generating a BI report using a BI tool at the BI server. The BI reports are automatically created based on the BI meta model and the BI report specification to present data mining and/or predictive insights. A limitation of the system, as disclosed in '684, is that the latest, updated, cost-efficient, and accurate custom business insights may not be delivered and shared with a customer on a near-real-time basis.

An article titled "A knowledge discovery object model API for Java," published on 28 October 4003 by Zuyderduyn et al. (hereafter referred to as "Zuyderduyn") discloses an application programming interface (API) that provides a framework for developing effective biological knowledge ontology for Java-based software projects. The API provides a robust framework for the data acquisition and management needs of an ontology implementation. In addition, the API contains classes to assist in creating GUIs to represent this data visually. A limitation of the framework, as disclosed in Zuyderduyn, is that the latest, updated, cost-efficient, and accurate custom business insights may not be delivered and shared with a customer on a near-real-time basis.

Therefore, an effective, accurate, and cost-efficient system and method is required to deliver and share the latest, updated, and accurate custom business insights on a near-real-time basis.

Further limitations and disadvantages of conventional and traditional approaches will become apparent to a person with ordinary skill in the art, by comparing described systems with some aspects of the present invention, as set forth in the ensuing description of the invention with reference to the drawings.

### SUMMARY

A system and method for providing an online knowledge product substantially as shown in, and/or described in connection with, at least one of the figures, as set forth more completely in the claims.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

FIG. 1 is a block diagram that illustrates a network environment for providing an online knowledge product, in accordance with an embodiment of the disclosure.
FIG. 2 is a block diagram that illustrates an exemplary electronic device, in accordance with an embodiment of the disclosure.
FIG. 3 is a block diagram that illustrates an exemplary K-Server, in accordance with an embodiment of the disclosure.
FIGs. 4, 4A, 4B, and 4C collectively show a service architecture implemented in an exemplary K-Server, in accordance with an embodiment of the disclosure.
FIG. 5 shows an application architecture implemented in an exemplary K-Server, in accordance with an embodiment of the disclosure.
FIG. 6 shows a data architecture of an exemplary K-Server, in accordance with an embodiment of the disclosure.
FIG. 7A shows an exemplary K-Class diagram of a request model implemented in an exemplary K-Server, in accordance with an embodiment of the disclosure.
FIG. 7B shows an exemplary K-Object diagram of a request model implemented in an exemplary K-Server, in accordance with an embodiment of the disclosure.
FIG. 8A shows an exemplary K-Class diagram of a K-Model implemented in an exemplary K-Server, in accordance with an embodiment of the disclosure.
FIG. 8B shows an exemplary K-Object diagram of a K-Model implemented in an exemplary K-Server, in accordance with an embodiment of the disclosure.
FIG. 9A shows an exemplary K-Class diagram of a metadata model implemented in an exemplary K-Server, in accordance with an embodiment of the disclosure.
FIG. 9B shows an exemplary K-Object diagram of a metadata model implemented in an exemplary K-Server, in accordance with an embodiment of the disclosure.
FIG. 9C shows an exemplary meta-modelling stack implemented in a K-Server, in accordance with the present disclosure.
FIG. 10A shows an exemplary K-Class diagram of a template model implemented in an exemplary K-Server, in accordance with an embodiment of the disclosure.
FIG. 10B shows an exemplary K-Object diagram of a template model implemented in an exemplary K-Server, in accordance with an embodiment of the disclosure.
FIG. 11A shows an exemplary K-Class diagram of a result model implemented in an exemplary K-Server, in accordance with an embodiment of the disclosure.
FIG. 11B shows an exemplary a K-Object diagram of a result model implemented in an exemplary K-Server, in accordance with an embodiment of the disclosure.
FIG. 12A shows an exemplary K-Class diagram of a transaction model implemented in an exemplary K-Server, in accordance with an embodiment of the disclosure.
FIG. 12B shows an exemplary K-Object diagram of a transaction model implemented in an exemplary K-Server, in accordance with an embodiment of the disclosure.
FIG. 13 a flow chart that illustrates an exemplary method for providing an online knowledge product, in accordance with an embodiment of the disclosure.

### DETAILED DESCRIPTION

The following described implementations may be found in a disclosed system and method for providing an online knowledge product. The following embodiments are described in sufficient detail to enable those skilled in the art to make and use the disclosed embodiments. It is to be understood that other embodiments will be evident based on the present disclosure, and that system, process, or mechanical changes may be made without departing from the scope of the present disclosure.

In the following description, numerous specific details are given to provide a thorough understanding of the disclosure. However, it may be apparent that the disclosed embodiments may be practiced without these specific details. To avoid obscuring the present disclosure, some well-known circuits, system configurations, and process steps are not disclosed in detail.

The drawings showing embodiments of the system are semi-diagrammatic and not to scale and, particularly, some of the dimensions are for the clarity of presentation and are shown exaggerated in the drawings. Where multiple embodiments are disclosed and described having some common features, for clarity and ease of illustration, description, and comprehension thereof, similar and like features one to another will ordinarily be described with similar reference numerals.

The present invention may be best understood when a description of various embodiments set forth herein is read with reference to the accompanying figures. However, those skilled in the art will readily appreciate that the detailed description given herein with respect to these figures is just for explanatory purposes as functional features and principles of the disclosed methods and systems may be deployed in variant embodiments incorporating modifications, adaptations and equivalent changes. For example, those skilled in the art will appreciate that, in light of the teachings presented, multiple alternative and suitable approaches can be recognized depending on the needs of a particular application, to implement the functionality or feature of any detail described herein. At the outset, the various terms used in the ensuing description are defined as under:

Knowledge Object: A Knowledge Object, hereinafter referred to as "K-Object," may correspond to a fundamental structure that may be configured to share knowledge using preferred presentation formats suitable for an intended audience, such as a registered user. A K-Object may be a well-structured interrelated set of data, information, and knowledge that may provide a feasible approach to deal with an organizational, management or leadership situation.

Knowledge Model: A Knowledge Model, hereinafter referred to as "K-Model," may correspond to data structure created by use of the K-Objects. The K-Model may be defined by a specialist not only with expertise in the service but also in structured data modelling.

Knowledge Base: A Knowledge Base, hereinafter referred to as "K-Base," may correspond to a centralized repository that may be used to store complex structured knowledge, such as the K-Objects and the K-Models, and unstructured information, such as typical data structures, utilized by the system. The K-Base may be operable to further store meta knowledge about the K-Models.

Knowledge Engine: A Knowledge Engine, hereinafter referred to as "K-Engine," may include a hardware, software, or a combination thereof, which may perform one or more of request processing (or workflows), template management, template design, document generation, and report refinement. The K-Engine may further extract knowledge data from the K-base by use of one or more automated artificial intelligence algorithms based on one or more queries received from the customer. The K-Engine may further store facts, rules, and other forms of logic to deduce new facts or highlight inconsistencies.

Knowledge Base Management: A Knowledge Base Management, hereinafter referred to as "K-Base Management," may be an expert system-based technology that may be implemented to maintain the K-Base. The K-Base Management may further comprise facts about the K-Objects and the K-Engine. The K-Base Management may further provide quality management and content integration for the K-Server.

Knowledge Product: A Knowledge Product, hereinafter referred to as "K-Product," may correspond to a knowledge product of a system for a service model that may include one or more of a company profile, an industry profile, and/or an executive profile.

Knowledge Space: A Knowledge Space, hereinafter referred to as "K-Space," may correspond to a centralized repository to store the K-Products. The K-Space may be operable to store historical data about customer requests based on the previous K-Products delivered to the customer. The K-Space may be operable to store metadata about the K-Products.

Knowledge Workspace: A Knowledge Workspace, hereinafter referred to as "K-Workspace," may correspond to a highly secure personal K-Space for the customer. The K-Workspace may be used by the customer to store one or more current requests and current K-Products that are to be delivered to the customers based on the one or more current requests.

Knowledge Space Management: A Knowledge Space Management, hereinafter referred to as "K-Space Management," may manage the K-Products available to specific customers while the K-Products are stored in the K-Space. The K-Space Management may further comprise checking of the whole K-Product stored in the K-Space by 4-eyes-check method before giving the customer access to the K-Product.

Knowledge Insights: Knowledge Insights, hereinafter referred to as "K-Insights," may refer to a combination of deduced knowledge facts derived from the one or more K-Products. The K-Insights may enable a customer to appropriately understand a business situation or issue that may be beneficial for decision making.

Knowledge Server: Knowledge Server, hereinafter referred to as "K-Server," may comprise suitable logic, circuitry, interfaces, and/or code that may intelligently determine the K-Product based on a request order. The K-Server may create the K-Product through automated technology (such as reusable K-Objects), information from external databases and public sources, and manual input. The manual input may ensure high quality and thus differentiate it from standard database products. The manual input may be coordinated through an efficient workflow platform. The K-Product may be delivered to the customer in a folder within the K-Space.

Knowledge Assistance: A Knowledge Assistance, hereinafter referred to as "K-Assistance," may correspond to one or more add-on services provided to the customer. The one or more add-on services may include advising, formatting or modifying one or more current knowledge documents that may include the K-Products.

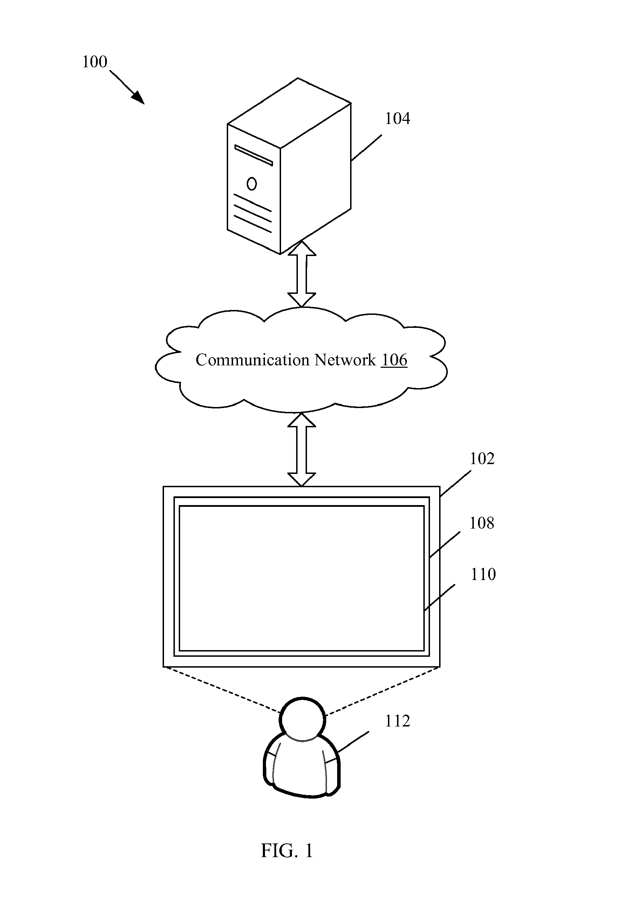

FIG. 1 is a block diagram that illustrates a network environment for providing an online knowledge product, in accordance with an embodiment of the disclosure. With reference to FIG. 1, there is shown a network environment 100. The network environment 100 may include an electronic device 102, a knowledge server, such as a K-Server 104, and a communication network 106. The electronic device 102 may comprise a display screen 108 that may render a user interface (UI) 110. The electronic device 102 may be associated with a registered user 112. The electronic device 102 may be communicably coupled with the K-Server 104, via the communication network 106.

The electronic device 102 may further comprise suitable logic, circuitry, interfaces, and/or code that may be operable to be utilized by the registered user 112 to provide a request for one or more knowledge products, such as K-Products. The registered user 112 may provide one or more user preferences, select a desired template for the K-Products, and make a corresponding online payment, via the UI 110 rendered on the display screen 108. In response to the request, the electronic device 102 may be operable to receive the requested K-Products from the K-Server 104. The electronic device 102 may be operable to render the received K-Products on the display screen 108. Examples of the electronic device 102 may include, but are not limited to, a television, an Internet Protocol Television (IPTV), a laptop, a tablet computer, a smartphone, and/or a personal digital assistant (PDA) device.

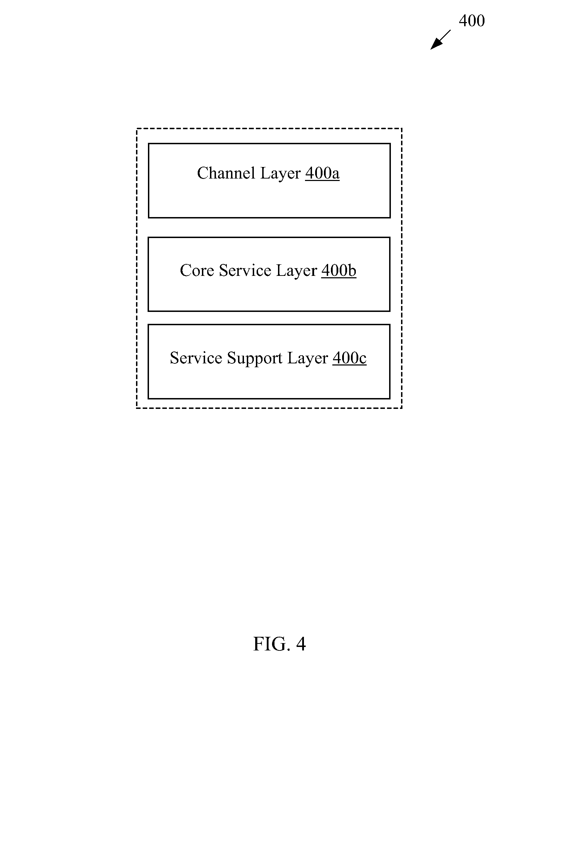

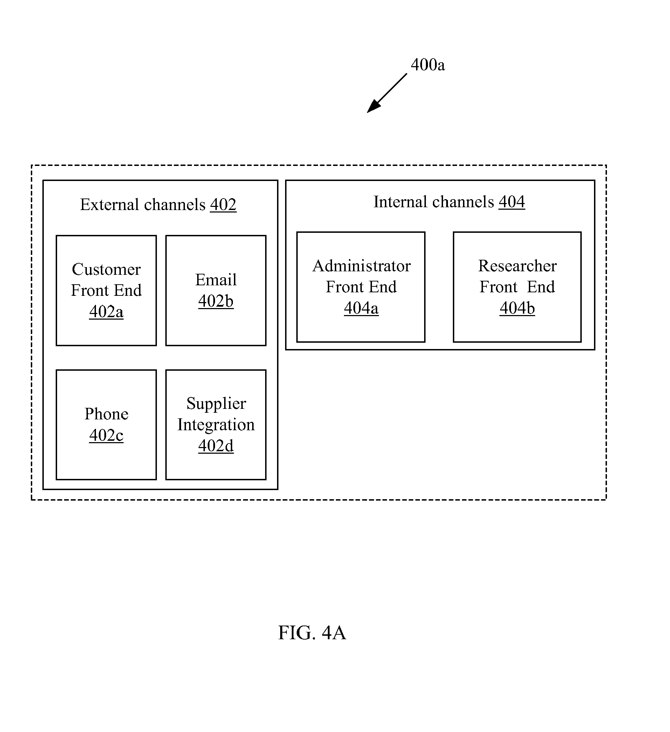

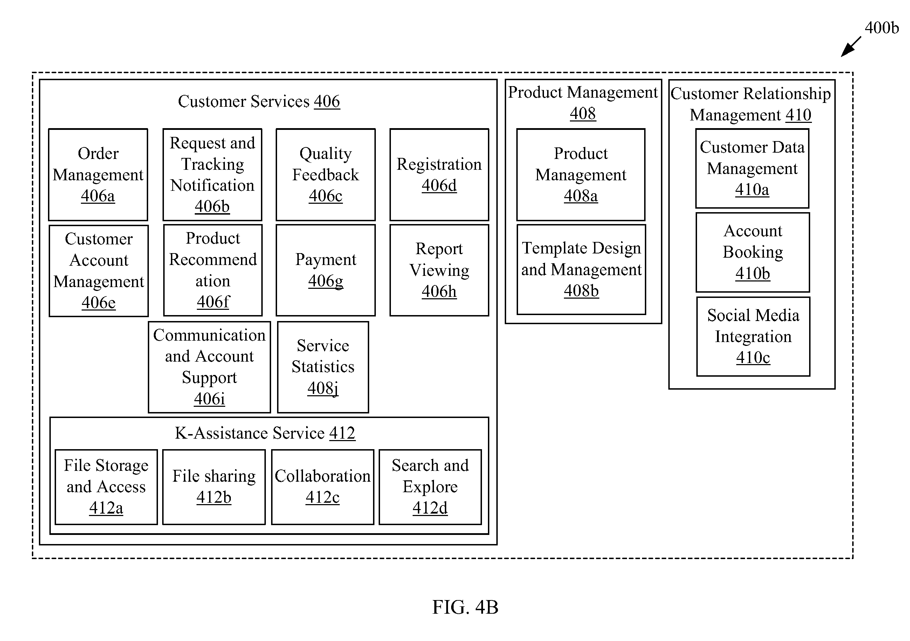

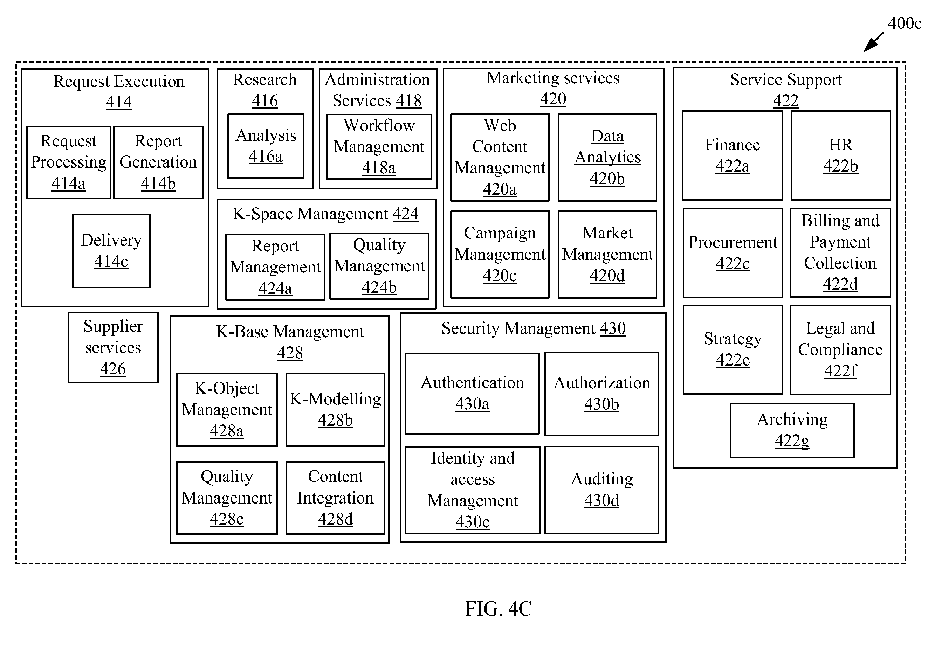

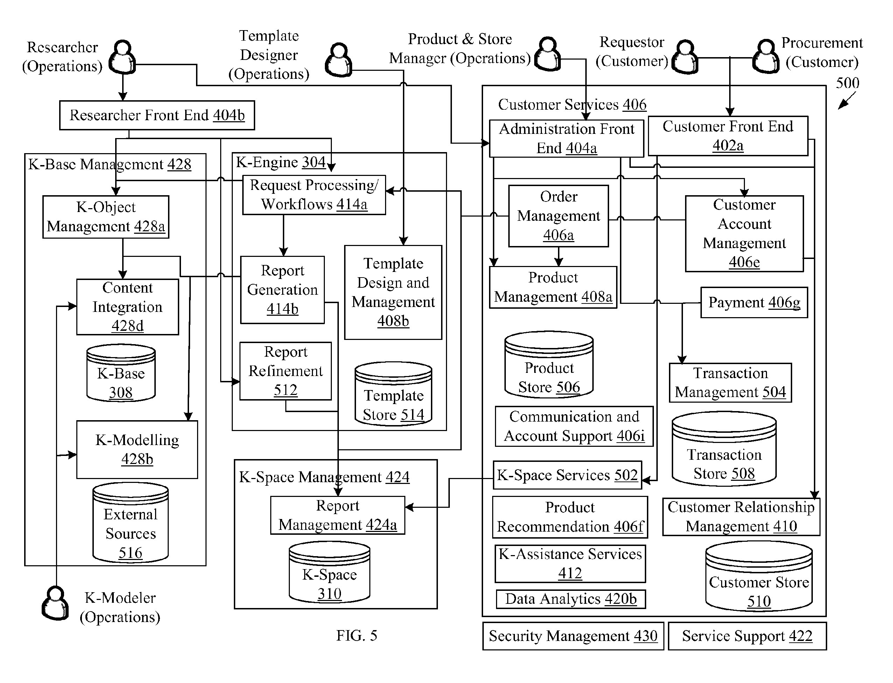

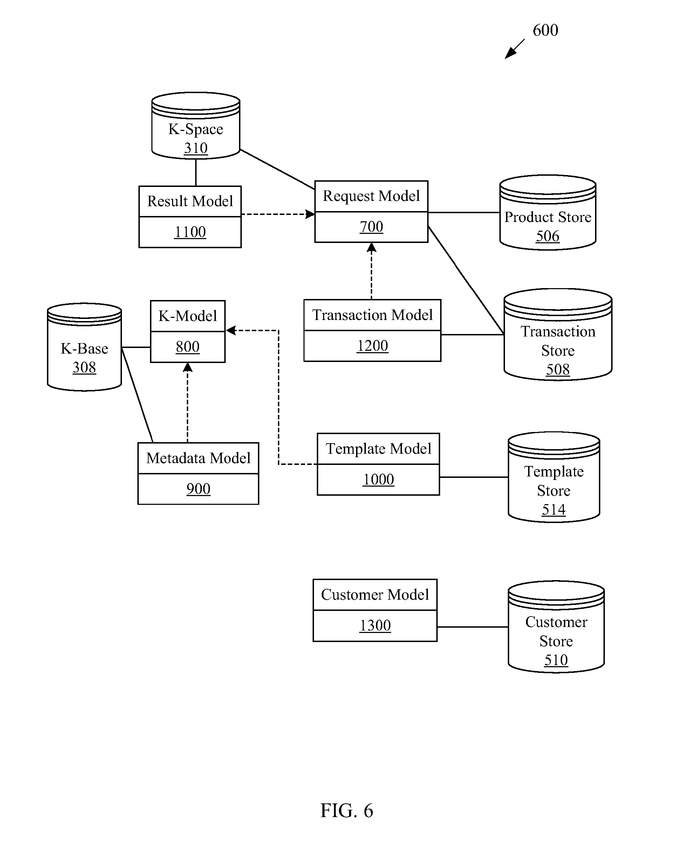

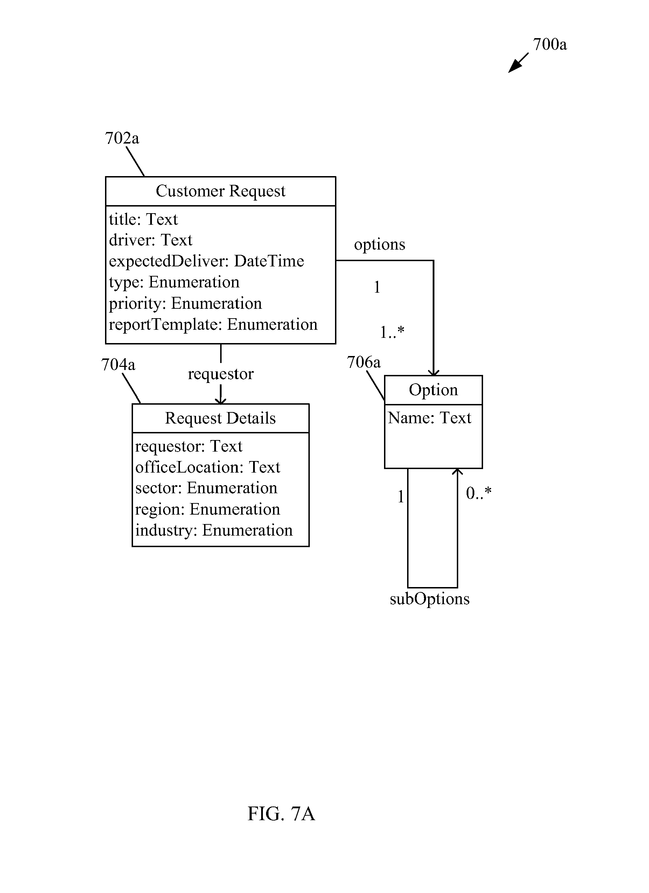

The K-Server 104 may comprise suitable logic, circuitry, interfaces, and/or code that may be operable to transmit the requested one or more K-Products to the electronic device 102. The K-Server 104 may comprise one or more processors that may be operable to implement a service architecture, an application architecture, and a data architecture in the K-Server 104. A service architecture 400 of the K-Server 104 has been described in detail in FIGs. 4, 4A, 4B, and 4C in the present disclosure. The application architecture of the K-Server 104 has been described in detail in FIG. 5 in the present disclosure. The data architecture of the K-Server 104 has been described in detail in FIG. 6 in the present disclosure. The one or more processors in the K-Server 104 may be further operable to implement a request model, a K-Model, a metadata model, a meta-modelling stack, a template model, a result model, and a transaction model. All such models have been described in detail in FIGs. 7A to 12B in the present disclosure. In an embodiment, all such models may be selected manually by one or more researchers associated with the K-Server 104. The K-Server 104 may further comprise the K-Base, the K-Space, and the K-Workspace that may store the K-Objects, the K-Models, and the K-Products.

The communication network 106 may include a medium through which the electronic device 102 may communicate with one or more servers, such as the K-Server 104. Examples of the communication network 106 may include, but are not limited to, the Internet, a cloud network, a wireless fidelity (Wi-Fi) network, a wireless local area network (WLAN), a local area network (LAN), a plain ordinary telephone service (POTS), and/or a metropolitan area network (MAN). Various devices in the network environment 100 may be operable to connect to the communication network 106, in accordance with various wired and wireless communication protocols. Examples of such wired and wireless communication protocols may include, but are not limited to, transmission control protocol and internet protocol (TCP/IP), user datagram protocol (UDP), hypertext transfer protocol (HTTP), file transfer protocol (FTP), ZigBee, EDGE, infrared (IR), IEEE 802.11, 802.16, cellular communication protocols, and/or Bluetooth communication protocols.

The display screen 108 may comprise suitable logic, circuitry, interfaces, and/or code that may be operable to render the received K-Products for the one or more customers, such as the registered user 112. The display screen 108 may be further operable to render one or more features and/or applications of the electronic device 102. The display screen 108 may be further operable to receive a request from the one or more customers, such as the registered user 112, via a touch-sensitive screen. Such a request may be received from the registered user 112 by means of a virtual keypad, a stylus, a touch-based input, and/or a gesture. The display screen 108 may be realized through several known technologies such as, but not limited to, liquid crystal display (LCD) display, light emitting diode (LED) display, organic LED (OLED) display technology, and/or the like.

The UI 110 may comprise suitable logic, interfaces, and/or code that may be operable to be render on the display screen 108. The UI 110 may be associated with a plurality of application programming interfaces (APIs). The APIs may resemble a Software as a Service (SaaS) that may correspond to a set of programming instructions and standards for accessing the software applications being executed at the K-Server 104. The APIs may comprise a description of the various K-Objects, K-Class definitions, and a set of behaviors associated with such K-Classes.

The registered user 112 may correspond to a customer who may log in to the K-Server 104 by using preconfigured credentials. The registered user 112 may generate a request order for a K-Product by use of the electronic device 102. Based on the request order, the requested K-Product may be displayed on the UI 110 rendered on the display screen 108. The registered user 112 may be required to pay a service fee based on type of the requested K-Product.

In operation, the registered user 112 may provide a request order for a K-Product, via the UI 110 rendered on the display screen 108 of the electronic device 102. The electronic device 102 may transmit the request order to the K-Server 104, via the communication network 106. In an embodiment, the registered user 112 may manually provide one or more user preferences along with the request order. The one or more user preferences may comprise information that may correspond to a context of the K-Product. The K-Product may be customized based on the one or more user preferences provided by the registered user 112. The one or more user preferences may comprise a size of the K-Product.

In an embodiment, the one or more user preferences for the company profile report may correspond to the one or more of estimated delivery time, executive summary, company overview, financials, key developments, strengths, weaknesses, opportunities and threats (SWOT) analysis, company strategy, industry analysis, and/or payment option. The one or more user preferences for the executive report may correspond to the one or more of estimated delivery time, executive summary, current role, previous experience and education, awards and recognition, recent speaking engagements, company snapshot, memberships, additional information, and/or payment option. The one or more user preferences for the industry profile report may correspond to the one or more of estimated delivery time, executive summary, sector overview, market size and growth, segments, competitive landscape, key issues and trends, sector outlook, key player profiles, business questions, and/or payment option.

In an embodiment, the pricing and estimated delivery time of the K-Product may be based on the size of a report corresponding to the K-Product selected by the registered user 112. In an embodiment, the one or more user preferences may further include a user-specified template for the requested K-Product, a preferred payment mode, and a desired turnaround time as part of the request order.

In an embodiment, the request order and the one or more user preferences may be automatically provided by one or more APIs based on a user profile and usage pattern of the registered user 112. Such a user profile and usage pattern may be retrieved from the K-Base, K-Space, and/or K-Workspace associated with the K-Server 104. In such an embodiment, the registered user 112 may be required to perform a single click on a predefined hardware or software button to confirm the one or more user preferences, which include the user-specified template for the requested K-Product, the preferred payment mode, and the desired turnaround time.

In an embodiment, the K-Server 104 may receive the request order and may extract knowledge from a knowledge database, such as the K-base, based on one or more queries in the request order. The K-Server 104 may select one or more K-Models from one or more pre-stored K-Models based on the received request. The one or more pre-stored K-Models may be generated based on one or more previous requests. The one or more previous requests may be similar to at least a portion of the received request. The one or more K-Models may comprise modification of one or more of content of a K-Class and/or a K-Object, a structure of the K-Class and/or the K-Object, association between two or more K-Classes, and/or association between two or more K-Objects.

The K-Server 104 may execute one or more automated artificial intelligence algorithms to extract knowledge from the K-Base. In an embodiment, the K-Base may be associated with one or more external data sources to retrieve comprehensive information on private companies and corporate structures. In an embodiment, the external data sources may comprise web search and news search applications, for example Bing search®, Google search®, Bing news®, Google news®.

The K-Server 104 may intelligently determine the requested K-Product by using the reusable K-Objects and K-Models retrieved from the one or more databases and/or manual input provided at the K-Server 104 based on the one or more user preferences. The one or more databases may comprise local memory or remote memory, such as the external data sources. The external data sources may be publically available cost-free or paid databases. In such an embodiment, a model transformation component in the K-Base management may transform data extracted from the external data sources into a K-Model. The K-Object management may use a plurality of K-Objects and links to associate such extracted data and generate a non-linear K-Model.

The K-Server 104 may determine a first K-Product based on the selected one or more K-Models. In an embodiment, report model (for example, MS word®, MS Powerpoint®, or MS Excel®) of the K-Product, as another form variable, may be defined during finalization of the K-Product. In such an embodiment, the additional form variable may be provided by the one or more researchers associated with the K-Server 104. In an embodiment, the additional form variable may be determined automatically by the K-Server 104 based on Artificial Intelligence (AI). An exemplary scenario in accordance with such an embodiment may be automatic determination of the additional form variable by the K-Server 104 for the K-Product to be a line chart or a bar chart for presenting revenues. In an embodiment, the K-Server 104 may automatically create the K-Product, as a word/PPT/XLS report, based on a combination of one or more user preferences provided by the registered user 112 and artificial intelligence.

The plurality of K-Objects, data structures, languages, and metalanguages may be stored in a 4-layer meta-modelling stack. In an embodiment, the plurality of K-Objects and associated attributes, such as validation period and revised date/time, may be stored in the K-Base manually, via an input provided by one or more researchers associated with the K-Server 104. In an embodiment, the plurality of K-Objects and associated attributes may be stored in the K-Base periodically, via an automated process. The request model, the metadata model, the transaction model, the template model, and the result model may be selected manually by the one or more researchers associated with the K-Server 104. The selected request model, the metadata model, the transaction model, the template model, and the result model may be implemented in the K-Server 104, and may be associated with one or more APIs.

The K-Server 104 may update the selected one or more K-Models based on the determined first K-Product. In an embodiment, the extracted knowledge may be edited by the one or more researchers associated with the K-Server 104 to generate the K-Product. The K-Server 104 may receive an input from a second user on the determined first K-Product to determine a second K-Product. The K-Server 104 may update the selected one or more K-Models based on the determined second K-Product so that a subsequent first K-Product is substantially similar to the determined second K-Product for a next request similar to the received request. In an embodiment, the editing, performed by the one or more researchers, may ensure high quality of the generated K-Product, and may thus differentiate the generated K-Product from standard database products. In an embodiment, the K-Product may be stored in the K-Base and/or the K-Workspace. In an embodiment, the K-Product may be stored in the K-Space that may be an online secure knowledge space. The K-Server 104 may share the intelligently determined K-Product with the registered user 112 in the K-Space in near real time. In an embodiment, the K-Objects associated with the generated K-Products may be reused for a subsequent same request order. In an embodiment, the K-Objects may be reused for another request order (generated by another registered user; not shown) that may be similar to the request order. Thus, the K-Base may learn and become enriched with every new request order. In an embodiment, the K-Server 104 may further provide a recommendation of related knowledge to the registered user 112, in addition to the requested K-Product. The generated K-Product may be transmitted to the electronic device 102, via the communication network 106. The electronic device 102 may be operable to receive the K-Product from the K-Server 104 and display the received K-Product on the UI 110 rendered on the display screen 108. In an embodiment, knowledge facts, such as K-Insights, may be derived by the registered user 112 from the K-Product received from the K-Server 104, via the communication network 106. The K-Insights may enable the registered user 112 to aid in decision making for a business situation or a business issue. In accordance with an embodiment, the functionalities of the K-Server 104 may be partly or completely implemented in other servers, such as a cloud server, without deviating from the scope of the disclosure.

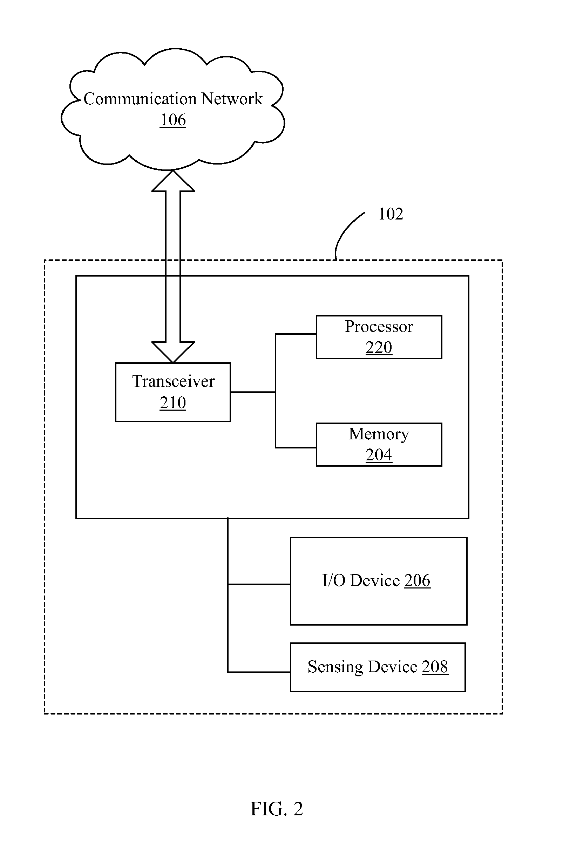

FIG. 2 is a block diagram that illustrates an exemplary electronic device, in accordance with an embodiment of the disclosure. FIG. 2 is explained in conjunction with elements from FIG. 1. With reference to FIG. 2, there is shown the electronic device 102. The electronic device 102 may comprise one or more circuits, such as a processor 202, a memory 204, one or more input/output (I/O) devices, such as an I/O Device 206, one or more sensing devices, such as a Sensing Device 208, and a Transceiver 210.

The processor 202 may be communicatively coupled to the memory 204, the I/O Device 206, the sensing device 208, and the transceiver 210. The transceiver 210 may be operable to communicate with the K-Server 104 and/or one or more other electronic devices, via the communication network 106. In accordance with an embodiment, the transceiver 210 may be operable to communicate with the one or more servers, such as the K-Server 104, via the communication network 106.

The processor 202 may comprise suitable logic, circuitry, interfaces, and/or code that may be operable to execute a set of instructions stored in the memory 204. The processor 202 may be operable to analyze a request order received from the registered user 112. The processor 202 may be further operable to transmit the request order to the K-Server 104, via the transceiver 210. The processor 202 may be implemented based on a number of processor technologies known in the art. Examples of the processor 202 may be an X86-based processor, a reduced instruction set computing (RISC) processor, an application-specific integrated circuit (ASIC) processor, a complex instruction set computing (CISC) processor, a microprocessor, a state machine, and/or other processors.

The memory 204 may comprise suitable logic, circuitry, and/or interfaces that may be operable to store a machine code and/or a computer program with at least one code section executable by the processor 202. The memory 204 may be further operable to store one or more user profiles, one or more text-to-speech conversion algorithms, one or more speech-generation algorithms, and/or other such data. The memory 204 may further be operable to store the K-Product generate by the K-Server 104. The memory 204 may be further operable to store operating systems and associated applications that may be executed by the processor 202. Examples of implementation of the memory 204 may include, but are not limited to, random access memory (RAM), read-only memory (ROM), hard disk drive (HDD), flash memory, and/or a secure digital (SD) card.

The I/O Device 206 may comprise suitable logic, circuitry, interfaces, and/or code that may correspond to various input and output devices that may be operable to communicate with the processor 202. The input device may be operable to receive an input from the registered user 112. The output device may be operable to provide an output to the registered user 112. Examples of the input devices may include, but are not limited to, an image-capturing unit (such as an embedded camera), a touch screen, a microphone, a motion sensor, a light sensor, and/or a docking station. Examples of the output devices may include, but are not limited to, a display screen of smart-glass device, a see-through display, a projection-based display, an electro-chromic display, and/or a speaker.

The sensing device 208 may comprise suitable logic, circuitry, and/or interfaces that may be operable to store a machine code and/or a computer program with at least one code section executable by the processor 202. The sensing device 208 may further comprise one or more sensors to include biometric sensors, such as a microphone, to detect a voice pattern to confirm recognition, identification, and/or verification of the user, such as the registered user 112. Other examples of the one or more sensors may include, but are not limited to, an accelerometer, a global positioning system (GPS) sensor, a compass or magnometer, an ambient light sensor, a tricorder, a gyroscope, a proximity sensor, an image sensor, a lux meter, a touch sensor, and/or an infrared sensor.

The transceiver 210 may comprise suitable logic, circuitry, interfaces, and/or code that may be operable to communicate with one or more servers, such as the K-Server 104, via the communication network 106. The transceiver 210 may implement known technologies to support wired or wireless communication of the electronic device 102 with the communication network 106. The transceiver 210 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer. The transceiver 210 may communicate via wireless communication with networks, such as the Internet, an Intranet and/or a wireless network, such as a cellular telephone network, a wireless local area network (LAN) and/or a metropolitan area network (MAN). The wireless communication may use any of a plurality of communication standards, protocols, and technologies, such as global system for mobile communications (GSM), enhanced data GSM environment (EDGE), wideband code division multiple access (W-CDMA), code division multiple access (CDMA), long-term evolution (LTE), time division multiple access (TDMA), Bluetooth, wireless fidelity (Wi-Fi) (such as IEEE 802.11a, IEEE 802.11b, IEEE 802.11g, and/or IEEE 802.11n), voice over internet protocol (VoIP), Wi-MAX, a protocol for email, instant messaging, and/or short message service (SMS).

In operation, the registered user 112 may provide a request order for a K-Product, via the UI 110 rendered on the display screen 108 of the electronic device 102. The K-Product may correspond to a category of a functional service. Examples of the category of the functional service may include, but are not limited to, the legal sector, energy and natural resources sector, consulting/advisory sector, banking and financial services sector, business development sector, telecom sector, media and technology sector, infographics sector, transportation and logistics sector, industrial goods sector, real estate sector, and/or market intelligence sector. The K-Product may be a report that may comprise one or more of a business insight report, a company profile report, an industry profile report, and/or an executive profile report. In an embodiment, the K-Product may be one or more business questions.

In an embodiment, the one or more user preferences may be based on the type of the requested K-Product. For example, when the requested K-Product is a company profile report, the one or more user preferences may be one or more of estimated delivery time, executive summary, company overview, financials, key developments, SWOT analysis, company strategy, industry analysis, and/or payment option. When the requested K-Product is an executive report, the one or more user preferences may be one or more of the estimated delivery time, executive summary, current role, previous experience and education, awards and recognition, recent speaking engagements, company snapshot, memberships, additional information, and/or payment option. When the requested K-Product is an industry profile, the one or more user preferences may be one or more of estimated delivery time, executive summary, sector overview, market size and growth, segments, competitive landscape, key issues and trends, sector outlook, key player profiles, and/or payment option.

In an embodiment, the pricing and estimated delivery time of the K-Product may be based on the size of a report corresponding to the K-Product selected by the registered user 112. In an exemplary scenario, when the K-Product is a company profile report that may be a four-page report, have an estimated delivery time of one to two days, and be priced at approximately "USD 456." For a standard eight-page report, the estimated delivery time may be three to four days, with a pricing of approximately "USD 560." For an in-depth 15-20-page report, the estimated delivery time may be three to five days, with a pricing of approximately "USD 1040."

In another exemplary scenario, when the K-Product is an industry sector report that may be four to five-page report, have an estimated delivery time of one to two days, and be priced at approximately, "USD 400." For a standard eight to twelve-page report, the estimated delivery time may be three to four days, with a pricing of "USD 1040". For an in-depth 15-20-page report, the estimated delivery time may be three to five days, with a pricing of approximately "USD 1407".

In an embodiment, the one or more user preferences may further include a user-specified template for the requested K-Product, a preferred payment mode, and a desired turnaround time as part of the request order. In an embodiment, the request order and the one or more user preferences may be automatically provided by one or more APIs based on a user profile and usage pattern of the registered user 112. Such a user profile and usage pattern may be retrieved from the K-Base, K-Space, and/or K-Workspace associated with the K-Server 104. In such an embodiment, the registered user 112 may be required to perform a single click on a predefined hardware or software button to confirm the one or more user preferences, which include the user-specified template for the requested K-Product, the preferred payment mode, and the desired turnaround time.

In an embodiment, the requested K-Product may be intelligently determined by the K-Server 104 using reusable K-Objects and K-Models retrieved from one or more databases and/or manual input provided at the K-Server 104. The intelligent determination of the K-Product may be based on the selected one or more user preferences. The K-Product may be stored in the K-Space that may be an online secure knowledge space. The K-Server 104 may share the intelligently determined K-Product with the processor 202 in the K-Space in near real time. The processor 202 may be operable to receive the K-Product from the K-Server 104 and display the received K-Product on the UI 110 rendered on the display screen 108.

Thus, the turnaround time for the requested K-Product may be substantially due to reusability of K-Objects and K-Models across different K-Products received from different registered users. The overall cost of the K-Product may be economical even for small entities or one-time requestors. The quality of the K-Product may be substantially high in terms of accuracy, robustness, and value addition. The K-Products may provide the registered user 112 with latest, updated, and accurate knowledge insights on a near-real-time basis.

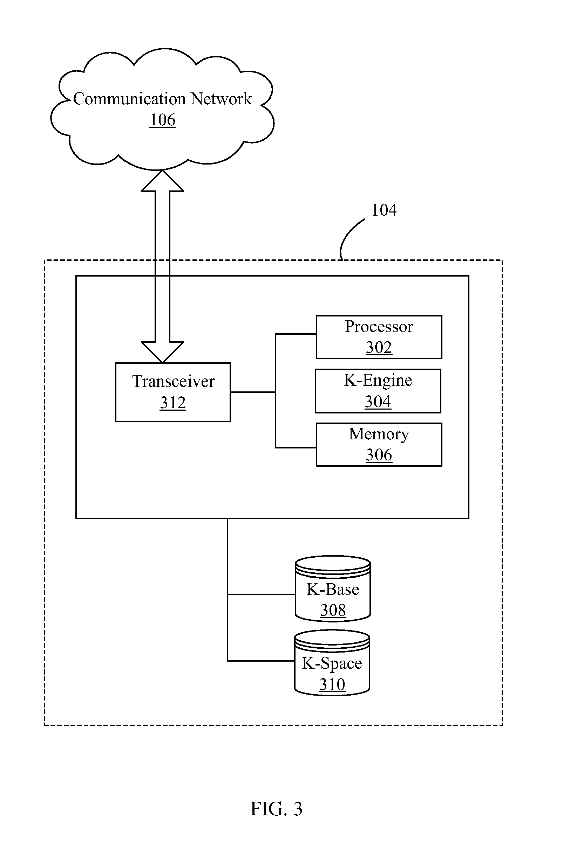

FIG. 3 is a block diagram that illustrates an exemplary K-Server in accordance with an embodiment of the disclosure. FIG. 3 is explained in conjunction with elements from FIG. 1. With reference to FIG. 3, there is shown the K-Server 104. The K-Server 104 may comprise one or more circuits such as a processor 302, a K-Engine 304, a memory 306, a K-Base 308, a K-Space 310, and a transceiver 312.

The processor 302 may be communicatively coupled to the K-Engine 304, the memory 306, the K-Base 308, the K-Space 310, and the transceiver 312. The transceiver 312 may be operable to communicate with the electronic device 102 and/or one or more other electronic devices via the communication network 106.

The processor 302 may comprise suitable logic, circuitry, interfaces, and/or code that may be operable to execute a set of instructions stored in the memory 306. The processor 302 may be implemented based on a number of processor technologies known in the art. The processor 302 may be operable to determine similarity scores between the determined first K-Product and the determined second K-Product. Examples of the processor 302 may be similar to the examples of the processor 202, as described in FIG. 2.

The K-Engine 304 may comprise suitable logic, circuitry, and/or interfaces that may be operable to perform one or more of request processing (or workflows), template management, template design, document generation, and report refinement. The K-Engine 304 may further extract knowledge from the K-Base 308 by using one or more automated artificial intelligence algorithms based on one or more queries received from the registered user 112. The K-Engine 304 may further retrieve facts and rules from the memory 306, apply rules on the facts, and deduce knowledge, new facts, and/or highlight inconsistencies.

The memory 306 may comprise suitable logic, circuitry, and/or interfaces that may be operable to store a machine code and/or a computer program with at least one code section executable by the processor 302. The memory 306 may comprise a product store, a transaction store, a template store, and a customer store. The memory 306 may store similarity scores determined by the processor 302. The memory 306 may further store a predetermined threshold value of the similarity score that may be retrieved by the processor 302. Examples of implementation of the memory 306 may be similar to the examples of the implementation of the memory 204, as described in FIG. 2.

The K-Base 308 may comprise suitable logic, circuitry, and/or interfaces that may correspond to a centralized repository that may be used to store complex structured knowledge, such as the K-Objects and the K-Models, and unstructured information, such as typical data structures, utilized by the system. The K-Base 308 may be operable to further store meta-knowledge about the K-Models.

The K-Space 310 may comprise suitable logic, circuitry, and/or interfaces that may correspond to an online secure repository that may store the K-Products to be shared with the registered user 112. The K-Space 310 may be operable to store historical data about requests generated by the registered user 112 based on the previous K-Products delivered to the registered user 112. The K-Space 310 may be further operable to store meta-knowledge about the K-Products.

The transceiver 312 may comprise suitable logic, circuitry, interfaces, and/or code that may be operable to communicate with the electronic device 102 and/or one or more other electronic devices, via the communication network 106. The transceiver 210 may implement known technologies to support wired or wireless communication of the electronic device 102 with the communication network 106. The transceiver 312 may include components, similar to the components of the transceiver 210, as described in FIG. 2.

In operation, the processor 302 may receive a request order for a K-Product. The request order may be generated by the registered user 112, via the UI 110 rendered on the display screen 108 of the electronic device 102. The K-Product may be a report that may comprise one or more of a business insight report, a company profile report, an industry profile report, and/or an executive profile report. In an embodiment, the K-Product may be one or more business questions.

In an embodiment, the one or more user preferences may be based on the type of the requested K-Product. For example, when the requested K-Product is a company profile report, the one or more user preferences may be one or more of estimated delivery time, executive summary, company overview, financials, key developments, SWOT analysis, company strategy, industry analysis, and/or payment option. When the requested K-Product is an executive report, the one or more user preferences may be one or more of the estimated delivery time, executive summary, current role, previous experience and education, awards and recognition, recent speaking engagements, company snapshot, memberships, additional information, and/or payment option. When the requested K-Product is an industry profile, the one or more user preferences may be one or more of the estimated delivery time, executive summary, sector overview, market size and growth, segments, competitive landscape, key issues and trends, sector outlook, key player profiles, and/or payment option.

In an embodiment, the processor 302 may be operable to select one or more K-Models from one or more pre-stored K-Models based on the received request, wherein the one or more pre-stored K-Models are generated based on one or more previous requests, wherein the one or more previous requests are similar to at least a portion of the received request. In an embodiment, the processor 302 may be operable to determine the pricing and estimated delivery time of the K-Product based on the size of a report corresponding to the K-Product requested by the registered user 112. In an embodiment, the one or more user preferences may further include a user-specified template for the requested K-Product, a preferred payment mode, and a desired turnaround time as part of the request order. In an embodiment, the request order and the one or more user preferences may be automatically provided by one or more APIs based on a user profile and usage pattern of the registered user 112. Such a user profile and usage pattern may be retrieved from the K-Base 308, K-Space 310, and/or K-Workspace associated with the processor 302. In such an embodiment, the registered user 112 may be required to perform a single click on a predefined hardware or software button to confirm the one or more user preferences, which include the user-specified template for the requested K-Product, the preferred payment mode, and the desired turnaround time.

In an embodiment, the processor 302 may determine a first K-Product based on the selected one or more K-Models. In an embodiment, the processor 302 may receive the request order and extract knowledge from a knowledge database, such as the K-Base 308, based on one or more queries in the request order. The K-Engine 304, in conjunction with the processor 302, may execute one or more automated artificial intelligence algorithms to extract the knowledge from the K-Base 308. In an embodiment, the K-Base 308 may be associated with an external data source to retrieve comprehensive information on private companies and corporate structures. Examples of such external data sources may include, but are not limited to, Bureau Van Dijk®, Avention®, Thompson Reuters®, D&B®, and Hoovers®. The K-Engine 304, in conjunction with the processor 302, may intelligently determine the requested K-Product by use of the reusable K-Objects and K-Models retrieved from the one or more databases, and/or manual input provided at the K-Server 104 based on the one or more user preferences. In such an embodiment, a model transformation component in the K-Base management may transform data extracted from the external data sources into a K-Model. The K-Object management may use a plurality of K-Objects and links to associate with such extracted data and generate a non-linear K-Model. Examples of the various K-Models may include, but are not limited to, a request model, a transaction model, a template model, a customer model, a result model, and a metadata model. The plurality of K-Objects, data structures, language, and meta-language may be stored in a four-layer meta-modelling stack.

In an embodiment, the processor 302 may receive an input from a second user, such as one or more researchers, on the determined first K-Product to determine a second K-Product. In an embodiment, the plurality of K-Objects and associated attributes, such as validation period and revised date/time, may be stored in the K-Base 308 manually, via an input provided by the one or more researchers associated with the processor 302. In an embodiment, the plurality of K-Objects and associated attributes may be stored in the K-Base 308 periodically, via an automated process. The request model, the metadata model, the transaction model, the template model, and the result model may be selected manually by the one or more researchers associated with the processor 302. The selected request model, the metadata model, the transaction model, the template model, and the result model may be implemented in the processor 302, and associated with one or more APIs.

In an embodiment, the extracted knowledge may be edited by the one or more researchers associated with the K-Server 104 to generate the K-Product. In an embodiment, the editing, performed by the one or more researchers may ensure high quality of the generated K-Product and may thus differentiate the generated K-Product from standard database products. The processor 302 may determine a similarity score between the determined first K-Product and the determined second K-Product. In an embodiment, the similarity score may be less than a predetermined threshold value. In such an embodiment, the processor 302 may generate the one or more K-Models. The processor 302 may further store the newly generated one or more K-Models in the K-Base 308, the K-Space 310, and/or the K-Workspace. The one or more K-Models are generated when the one or more K-Models is different from the one or more pre-stored K-Models. In an embodiment, the similarity score may be greater than or equal to the predetermined threshold value. In such an embodiment, the processor 302 may update the selected one or more K-Models based on the determined second K-Product so that a subsequent first K-Product is substantially similar to the determined second K-Product for a next request similar to the received request. The processor 302 may update the selected one or more K-Models such that the similarity score increases for every subsequent request. The processor 302 may update the one or more K-Models based on machine learning of knowledge that corresponds to historic requests.

In an embodiment, the K-Product may be stored in the K-Base 308 and/or the K-Workspace. In an embodiment, the K-Product may be stored in the K-Space 310 that may be an online secure knowledge space. The K-Engine 304, in conjunction with the processor 302, may share the intelligently determined K-Product with the registered user 112 in the K-Space 310 in near real time. In an embodiment, the K-Objects associated with the generated K-Products may be reused for a subsequent same request order. In an embodiment, the K-Objects may be reused for another request order (generated by another registered user; not shown) that may be similar to the request order. Thus, the K-Base 308 may learn and thus become enriched with every new request order. In an embodiment, the K-Engine 304, in conjunction with the processor 302, may further provide a recommendation of related knowledge to the registered user 112, in addition to the requested K-Product. The generated K-Product may be transmitted to the electronic device 102, via the communication network 106. In an embodiment, knowledge facts, such as K-Insights, may be derived by the user 112 from the K-Products received from the processor 302, via the communication network 106. The K-Insights may enable the user 112 to aid in decision making for a business situation or a business issue. In accordance with an embodiment, the functionalities of the processor 302 may be partly or completely implemented in other servers, such as a cloud server, without deviating from the scope of the disclosure.

FIGs. 4, 4A, 4B, and 4C collectively show a service architecture implemented in the K-Server 104, in accordance with an embodiment of the disclosure. FIGs. 4, 4A, 4B, and 4C are described in conjunction with FIGs. 1, 4, and 3. The service architecture 400 may comprise a channel layer 400a (FIG. 4A), a core service layer 400b (FIG. 4B), and a service support layer 400c (FIG. 4C), that may be structured into domains and sub-domains. In an embodiment, the layers of the service architecture 400 may comprise a plurality of service components. The individual components of the plurality of service components are shown as separate boxes in FIGs. 4 to 4C. In an embodiment, the individual components may be collectively implemented as an integrated circuit based on a system on a chip (SoC) topology. In an embodiment, the individual components may be individually implemented as individual circuits based on a circuit on a chip (CoC) topology. In an embodiment, the service architecture 400 may be realized in hardware, or a combination of hardware and software. In an embodiment, the service architecture 400 may be realized in a centralized fashion, in at least the K-Server 104, or in a distributed fashion, where different elements may be spread across several interconnected computer systems. A combination of hardware and software may be a general-purpose computer system with a computer program that, when loaded and executed, may control the computer system such that it carries out the methods described herein. In an embodiment, the service architecture 400 may be realized in hardware that comprises a portion of suitable integrated circuit that also performs other functions. In an embodiment, the service architecture 400 may be realized as suitable logic, interfaces, and/or code that may be stored in the memory 306, the K-Base 308, the K-Space 310, or other external data sources. Such logic, interfaces, and/or code may be executed in conjunction by the processor 302 in conjunction with the K-Engine 304.

Referring to FIG. 4A, the channel layer 400a may correspond to one or more external and/or internal channels that may be virtual connections with one or more front ends, such as the UI 110. The one or more external and/or internal channels may be a simple application UI or a personal interaction, such as a chat, and/or a phone.

The domains of the channel layer 400a may include an external channel 402 and an internal channel 404. The external channel 402 domain may include sub-domains that may correspond to different functionalities, such as customer front end 402a, an email 402b, a phone 402c, and a supplier integration 402d. The internal channel 404 domain may include sub-domains that may correspond to different functionalities, such as an administration front end 404a and a researcher front end 404b.

The customer front end 402a may be a website that may build major channel and primary point of contact for communication with the registered user 112. Filing a request order, receiving ordered documents, and interacting with the service provider may be done through the external channel 402. The email 402b may serve as a complementary external channel that may provide standard asynchronous messaging for automatic notifications. Other kind of collaboration that requires human interaction by the provider may be directed preferably through the customer front end 402a instead of the email 402b. The phone 402c may partly provide support services to the registered user 112 at the customer front end 402a. The supplier integration 402d may be a service that may provide required access to several kinds of external data sources, via human interfaces or system interfaces.

The administration front end 404a may include back-office application UI to access functionality of the domains, such as the product management, the CRM, the request execution, the administration, the marketing, K-Base management, and the K-Space management. The researcher front end 404b may correspond to an interface, via which the researcher may communicate with one or more software systems. The knowledge documents, such as the K-Product, which may contain the K-Insights requested by the registered user 112, may be created based on such communication.

Referring to FIG. 4B, the core service layer 400b may include one or more core functions that may provide a predefined knowledge service offering to the registered user 112. The domains of the core service layer 400b may include customer services 406, product management 408, customer relationship management (CRM) 410, and K-Assistance service 412. The customer services 406 domain may include sub-domains that may correspond to different functionalities, such as order management 406a, request tracking and notification 406b, quality feedback 406c, registration 406d, customer account management 406e, communication and account support 406i, payment 406g, report viewing 406h, product recommendation 406f, and service statistics 406j. The customer services 406 may further comprise the K-Assistance service 412 sub-domain. The K-Assistance service 412 may correspond to different functionalities, such as file storage and access 412a, file sharing 412b, collaboration 412c, and search and explore 412d. The product management 408 may include sub-domains that may correspond to different functionalities, such as product management 408a and template design and management 408b. The domains of the core service layer 400b may include request execution 414, research 416, administration service 418, marketing 420, service support 422, K-Space management 424, supplier service 426, K-Base management 428, and security management 430. The request execution 414 may include sub-domains that may correspond to different functionalities, such as request processing 414a, report generation 414b, and delivery 414c. The research 416 may include a sub-domain that may correspond to a functionality, such as analysis 416a. The administration service 418 domain may include a sub-domain that may correspond to a functionality, such as workflow management 418a. The marketing service 420 may include sub-domains that may correspond to different functionalities, such as web content management 420a, data analytics 420b, campaign management 420c, and market management 420d. The K-Base management 428 may include sub-domains that may correspond to different functionalities, such as K-Object management 428a, K-Modeling 428b, K-Base quality management 428c, and content integration 428d. The K-Space management 424 may include sub-domains that may correspond to different functionalities, such as report management 424a, and K-Space quality management 424b. The security management 430 may include sub-domains that may correspond to different functionalities, such as authentication 430a, authorization 430b, identity and access management 430c, and auditing 430d.

The customer services 406 may correspond to one or more services provided to the registered user 112 by the K-Server 104. The order management 406a may be related to a first part of a request ordering process that may enable the registered user 112 to place a request order in the system. The request tracking and notification 477 may be related to a second part of the ordering process, whereby a current state of a request order may be tracked by the registered user 112 and notified when a requested K-Product is available or some kind of user interaction is expected. The quality feedback 406c may be related to a third part of the ordering process. Once the request order is fulfilled, the K-Server 104 may prompt the registered user 112 to provide feedback about the K-Product. The registration 406d may be related to a provision by which a customer may open a new individual or corporate account, and may become the registered user 112. In an embodiment, initial registration may be a precondition to utilize the customer services 406. The customer account management 406e may include account details, contact details, payment information, and managing of credits for a corporate account that may be managed by the registered user 112. The communication and account support 406i functionality may facilitate various communication services, such as a chat via the UI or a call via a phone, for the registered user 112.

The payment 406g may include a first payment functionality that may provide integration to payment providers so that online payments with credit cards may be handled by the K-Server 104. The payment 406g may further include a second payment functionality that may provide the registered user 112 to pay by previously bought credits for corporate accounts. The report viewing 406h may provide sample reports that may be provided for imagination of the final knowledge document, such as the K-Product, before the K-Product is ordered. The report viewing 406h may optimize the format of the K-Products that may be viewed on web and mobile. The optimized format of the K-Product may include reduced content compared with the complete K-Product created. The product recommendation 406f may facilitate presentation of recommendations, such as company analysis for competitors, to the registered user 112, during an interaction with the system, during the K-Product selection process, or after the K-Product delivery.

The service statistics 406j may facilitate in providing statistics about previous requests to corporate accounts. Procurement may analyze order history. The K-Assistance service 486 may facilitate an individual interaction between the registered user 112 and the one or more researchers. The file storage and access 412a may correspond to the K-Space 310 that may store knowledge documents, such as K-Products, delivered to the registered user 112. Thus, typically the one or more researchers may store final K-Products at the K-Space 310 and the registered user 112 may download the K-Product as part of the K-Product delivery process. In an embodiment, the file storage and access 412a may provide capabilities for versioning. The file sharing 412b may facilitate sharing of the K-Product between the one or more researchers and the registered user 112 within the K-Space 310. In an embodiment, the registered user 112 may share the K-Product with other users not registered to the system. The collaboration 412c may correspond to a service that may enable the K-Space 310 to provide features for social collaboration, such as "likes," "comments," and "reviews." The search and explore 412d may correspond to a service that may enable the K-Space 310 to be browsed by providing search functionality for efficiently finding available reports and knowledge documents.

The product management 408 may provide one or more services that may facilitate the management of the K-Products. The product management 408 domain may include sub-domains that may correspond to different functionalities, such as product management 408a and template design and management 408b. The product management 408a may be associated with the registered user 112, such as a product manager, who may define the K-Products, including detailed structure and pricing, to be provided by the K-server 104. The template design and management 408b may provide template documents that may be highly standardized to foster efficiency in manual creation and modification of the knowledge documents. The template documents may further provide a basis for automated generation of the knowledge documents.

The customer relationship management (CRM) 410 may include customer data management 410a, account booking 410b, and social media integration 410c. The customer data management 410a may include customer data-oriented features, partly provided by a separate CRM system, which may facilitate data integration (including import and export) between different systems. The account booking 410a may facilitate account keeping for all request orders associated with the account of the registered user 112, thereby providing an internal view of the request orders and payments provided by the registered user 112. The social media integration 410c may facilitate a social media account (such as LinkedIn) that may be linked to the knowledge account if the registered user 112 logs in with the social media account.

The request processing 414a may facilitate processing of a request order along an optimized service process that may include multiple manual activities executed by the one or more researchers and one or more automatic tasks executed by the K-Server 104. The request processing 414a may facilitate one or more tools (such as a service process engine) that may be required to organize the system that includes the electronic device 102 and the K-Server 104. The report generation 414b may facilitate creation of K-Products based on manual and automated steps. For example, an initial creation of a draft report may be highly automated, while some content may be added and finalized by the one or more researchers. The delivery 414c may facilitate final delivery of the K-Products to the registered user 112 by the means of the K-Space 310 and notification features.

The analysis 416a sub-domain may correspond to a functionality of request execution and management of the K-Base 308 that may require research activities performed by the one or more researchers. The workflow management 418a may correspond to dedicated centralized authority that may define and implement workflows that may be followed by the request execution 414. The supplier service 426 facilitate extension of supplier integration by providing the suppliers specific access to the backend system for managing an integration of datafeed knowledge services.

The web content management 420a may facilitate content publishing on the website associated with the K-Server 104. For example, web content managers may provide static text on a public website, publish PR news, and/or engage in blogging. The data analytics 420b may leverage the data for activities of the registered user 112 by defining metrics and collecting the required data. Information from a conversion dashboard may be retrieved to assess the current performance of service and locations for potential improvements. Analytics may subsume numbers about acquisition, activation, retention, revenue, and referral. The campaign management 420c may facilitate organized campaigns to target online registered users expected to be interested in the K-Products and knowledge services. Specific online traffic may be increased by known-in-the-art campaigns, such as Google AdWords campaigns. The market management 420d may determine market segments such as legal, audit, or consulting companies. Market segments not yet developed but containing buying customers may be recognized based on an analysis of customer data provided by social media data, surveys, or during the order process.

The K-Object management 428a may facilitate a knowledge base of all K-Objects and K-Insights provided in the K-Product. The K-Product may be created, maintained, and stored electronically by the one or more researchers such that the K-Objects may be reused for subsequent K-Products. The K-Modeling 428b may include structuring of the K-Objects defined by the K-Model. Such K-Models may be defined by the one or more researchers not only with expertise in the knowledge service but also in structural data modeling. The K-Base quality management 428c for the K-Base 308 may ensure that the K-Objects are appropriately structured and reusable for repeated use, based on a four-eyes-check and securing intellectual property (IP) rights for the content in use. The content integration 428d may facilitate integration of content based on the knowledge available in the K-Base, standardized data sources, non-standardized data sources, and automatically accessed databases.

The report management 424a may facilitate the one or more researchers to manage reports corresponding to the K-Products available to the registered user 112 while the K-Products are stored in the K-Space. The report management 424a may further facilitate creation of new versions of the K-Product and grant of an access to the registered user 112, once finalized. The K-Space quality management 424b may facilitate checking (such as by four-eyes-check) of the K-Product stored in the K-Space before giving the registered user 112 access to the K-Product.

The authentication 430a may facilitate access control to confirm an identity of the registered user 112. The corresponding functionality may be provided for the internal and the external front ends. The automated process of authorization 430b may facilitate access control to approve or disapprove access requests. The corresponding functionality may be provided for the internal and the external front ends. The identity and access management 430c may facilitate governance (such as regulatory requirements), management (such as managing roles of the registered user 112 and access policies) and execution aspects (such as reconciliation at runtime) of security management. The auditing 430d may facilitate digital interactions with the system stored in an event log. Further, information about granted access rights may be historicized and protected against manipulation.

Referring to FIG. 4C, the service support layer 400c may comprise a domain, service support 422. The service support 422 may include sub-domains that may correspond to different functionalities, such as finance 422a, human resource (HR) 422b, procurement 422c, billing and payment collection 422d, strategy 422e, legal and compliance 422f, and archiving 422g. The finance 422a may facilitate internal accounting and financial management. The HR 422b may facilitate human resource management and administration. The procurement 422c may facilitate acquisition of required K-Products and services from external sources. The billing and payment collection 422d may facilitate operational activities of accounting. The strategy 422e may facilitate strategy definition and execution. The legal and compliance 422f may facilitate risk management of legal and compliance aspects, such as IP protection of data and information sold to customers. The archiving 422g may facilitate digital and physical archiving of knowledge documents based on legal and compliance requirements.

In operation, the registration 406d may facilitate a first-time customer to open a new individual or corporate account and register with the K-Server 104. The customer may be thereafter regarded as a registered user 112. Subsequently, to generate a request order for a desired K-Product, the registered user 112 may log in to the K-Server 104, via the customer front end 402a of the external channel 402. The registered user 112 may interact with the customer front end 402a, via the UI 110 rendered on the display screen 108 of the electronic device 102. The authentication 430a may facilitate access control to confirm the identity of the registered user 112.

The order management 406a may enable the registered user 112 to place a request order in the system, via the external channel 402. The automated process of authorization 430b, in conjunction with the identity and access management 430c, may facilitate access control to approve or disapprove the access requests and/or the request order.

The request tracking and notification 477 may track a current state of the request order generated by the registered user 112. The request tracking and notification 477 may further track one or more user preferences, related to the desired K-Product, provided by the registered user 112. The request tracking and notification 477 may further notify the registered user 112 when the requested K-Product is available or some kind of user interaction is expected.

The registered user 112 may be required to perform a single click on a predefined hardware or software button to confirm the preferred payment mode. The payment 406g may provide integration to payment providers to handle online payments with credit cards. The payment 406g may further facilitate the registered user 112 to pay by previously bought credits for corporate accounts. The report viewing 406h may provide sample reports to the registered user 112 for imagination of the final K-Product before it is ordered. The report viewing 406h may optimize the format, with reduced content, of the K-Products that may be viewed on web and mobile.

The K-Base management 428, by use of the K-Object management 428a, may generate a knowledge base of all K-Objects and K-Insights required for the desired K-Product based on the one or more user preferences. The K-Base management 428, by use of the content integration 428d, may facilitate integration of content based on the knowledge available in the K-Base, standardized data sources, non-standardized data sources, and automatically accessed databases. The supplier service 426 may facilitate extension of supplier integration by providing the suppliers specific access to the backend system for managing an integration of datafeed knowledge services to the K-Product.

The K-Base management 428, by use of the K-Modeling 428b, may structure the K-Objects based on the one or more K-Model stored in the memory 132. The K-Base management 428, by use of the K-Base quality management 428c, may ensure that the K-Objects are appropriately structured and reusable for repeated use, based on a four-eyes-check and securing intellectual property (IP) rights for the content in use. In an embodiment, the analysis 416a functionality may prompt manual input by the one or more researchers associated with the K-Server 104. The request processing 414a may further process the request order along an optimized service process that may include multiple manual activities executed by the one or more researchers and one or more automatic tasks executed by the K-Server 104. The request processing 414a may facilitate one or more tools that may organize the system that includes the electronic device 102 and the K-Server 104.

In an embodiment, the product management 408, by use of the product management 491, may determine and define the detailed structure and pricing of the K-Product, as desired by the registered user 112 based on the one or more user preferences. The template design and management 408b may provide template documents to automatically determine the template of the desired K-Product. The report generation 414b may create the desired K-Product based on the manual steps provided by the one or more researchers and the automated steps executed by the K-Server 104. The K-Space management 424 may electronically store the created K-Product in the file storage and access 412a corresponding to the K-Space 310.

The K-Space management 424, by use of the report management 424a, may facilitate the one or more researchers to manage reports corresponding to the K-Products available to the registered user 112 while the K-Products are stored in the K-Space. The report management 424a may further create new versions of the K-Product and grant of an access to the registered user 112, once finalized. The K-Space management 424, by use of the K-Space quality management 424b, may facilitate checking (such as by four-eyes-check) of the K-Product stored in the K-Space, before giving the registered user 112 an access to the K-Product.

The delivery 414c may facilitate final delivery of the K-Products to the registered user 112 by the means of the K-Space 310 and notification features. In an embodiment, the one or more researchers may store final K-Products at the K-Space 310 and the registered user 112 may download the K-Product as part of the K-Product delivery process. In an embodiment, the file sharing 412b may facilitate sharing of the K-Product between the one or more researchers and the registered user 112 within the K-Space 310. In an embodiment, the registered user 112 may share the K-Product with other users not registered to the system. The collaboration 412c may enable the K-Space 310 to provide features for social collaboration, such as "likes," "comments," and "reviews." In an embodiment, the search and explore 412d may correspond to a service that may enable the K-Space 310 to be browsed by providing search functionality for efficiently finding available reports and knowledge documents. The delivery of the K-Product in the K-Space 310 may be notified by the email 402b or the phone 402c, via the external channel 402.

In an embodiment, the quality feedback 406c may prompt the registered user 112 to provide feedback about the K-Product once the request order is fulfilled. In an embodiment, the communication and account support 406i functionality may facilitate various communication services, such as a chat via the UI or a call, via a phone for the registered user 112, for one or more enquires regarding the delivered K-Product. In an embodiment, the product recommendation 406f may facilitate presentation of recommendations, such as company analysis for competitors, to the registered user 112, during an interaction with the system, during the K-Product selection process, or after the K-Product delivery. In an embodiment, the service statistics 406j may facilitate in providing statistics about previous requests to the registered user 112 associated with a corporate account.

The CRM 410 domain may include customer data management 410a, account booking 410b, and social media integration 410c. The customer data management 410a may include customer data oriented features, partly provided by a separate CRM system, which may facilitate data integration (including import and export) between different systems. The account booking 410a may facilitate account keeping for all request orders associated with the account of the registered user 112, thereby providing an internal view onto the request orders and payments provided by the registered user 112. The social media integration 410c may facilitate a social media account (such as LinkedIn) that may be linked to the knowledge account if the registered user 112 logs in with the social media account.

The workflow management 418a may correspond to dedicated centralized authority that may define and implement workflows that may be followed by the request execution 414. The web content management 420a may facilitate content publishing on the website associated with the K-Server 104. For example, web content managers may provide static text on a public website, publish PR news, and/or engage in blogging. The data analytics 420b may leverage the data for activities of the registered user 112 by defining metrics and collecting the required data. Information from a conversion dashboard may be retrieved to assess current performance of service and locations for potential improvements. Analytics may subsume numbers about acquisition, activation, retention, revenue, and referral. The campaign management 420c may facilitate organized campaigns to target online registered users expected to be interested in the K-Products and knowledge services. Specific online traffic may be increased by known-in-the-art campaigns, such as Google AdWords campaigns. The market management 420d may determine market segments such as legal, audit, or consulting companies. Market segments not yet developed, but containing buying customers, may be recognized based on an analysis of customer data provided by social media data, surveys, or during the order process.

The auditing 430d may facilitate digital interactions with the system stored in an event log. Further, information about granted access rights may be historicized and protected against manipulation. The finance 422a may facilitate internal accounting and financial management. The HR 422b may facilitate human resource management and administration. The procurement 422c may facilitate the acquisition of required K-Products and services from external sources. The billing and payment collection 422d may facilitate operational activities of accounting. The strategy 422e may facilitate strategy definition and execution. The legal and compliance 422f may facilitate risk management of legal and compliance aspects, such as IP protection of data and information sold to customers. The archiving 422g may facilitate digital and physical archiving of knowledge documents according to legal and compliance requirements.

FIG. 5 shows an application architecture implemented in the K-Server 104, in accordance with an embodiment of the disclosure. FIG. 5 is described in conjunction with FIGs. 1 to 4C. FIG. 5 illustrates an application architecture 500 that may comprise a plurality of components represented by boxes, as shown in FIG. 5. The plurality of components may be collectively implemented as an integrated circuit based on a system on a chip (SoC) topology. In an embodiment, the individual components may be individually implemented as individual circuits based on a circuit on a chip (CoC) topology. In an embodiment, the application architecture may be realized in software code or a combination of hardware and software. In an embodiment, the application architecture may be realized in a centralized fashion, in at least the K-Server 104, or in a distributed fashion, where different elements may be spread across several interconnected computer systems. A combination of hardware and software may be a general-purpose computer system with a computer program that, when loaded and executed, may control the computer system such that it carries out the methods described herein. In an embodiment, the application architecture may be realized as suitable logic, interfaces, and/or code that may be stored in the memory 306, the K-Base 308, the K-Space 310, or other external data sources. Such logic, interfaces, and/or code may be executed by the processor 302 in conjunction with the K-Engine 304.

The application architecture 500 of the K-Server 104 may be developed based on the service model, as shown in FIGs. 4A to 4C. The application architecture 300 may bundle a plurality of functionalities identified in the service architecture 400. The application architecture 300 may further map the plurality of functionalities onto distinguishable applications that may be later implemented as information technology (IT) systems. The application architecture 500 may be structured into a plurality of applications, as shown in FIG. 5. The plurality of applications may group the system components into technically related bundles, and may possibly combine within a single IT system. The plurality of applications may include customer services 406, K-Space management 424, the K-Engine 304, and K-Base management 428.

The customer services 406 may include a plurality of components, such as the customer front end 402a, the administration front end 404a, the order management 406a, product management 408a, the customer account management 406e, the payment 406g, the CRM 410, communication and account support 406i, the product recommendation 406f, the K-Assistance service 412, and the data analytics 420b. The customer services 406 may further include additional components, such as K-Space services 502, transaction management 504, product store 506, transaction store 508, and customer store 510.

The customer front end 402a may correspond to a web application UI that may be used by the registered user 112 based on one or more roles, such as a requestor and a procurer. The customer front end 402a may further facilitate the registered user 112 to request one or more request orders, via the UI. The customer front end 402a may further provide an interface for customer account administration. The component, administration front end 404a, may provide a dedicated front end to enable a product manager, a store manager, or a researcher to perform back-office tasks for administration and operation of customer services. The component, administration front end 404a, may have a different appearance than the customer front end 402a. The administration front end 404a may be optimized for corresponding back-office employees.

The order management 406a may be configured to handle creation of request orders and subsequent processing until the request orders are fulfilled or cancelled. The request order may comprise details about the requested K-Product and may optionally include a knowledge document template uploaded during the request order process. The product management 408a may provide a single interface to the product store that may be a persistence component. The product management 408a may facilitate the product manager to define a structure of K-Products and corresponding pricing.

The customer account management 406e may allow a new customer to register a new account and thereafter manage the account details autonomously. The transaction management 504 may provide a single interface to a persistence component, such as the transaction store 508. The transaction management 504 may further manage temporary session information, persistent attributes, and a state of the orders in the system during the creation of the request order. The payment 406g may provide payment functionality to the registered user 112 and may integrate a plurality of payment providers. The CRM 410 may be a single interface to a persistence component, such as the customer store 510, and may manage user data relevant to the fulfillment of customer services. The user data may be accessed and modified by internals and partly the registered user 112.

The communication and account support 406i, such as chat, may provide or integrate communication channels involved in the customer services. The K-Space services 502 may build an interface between the customer services web application and the K-Space 310. The K-Space services 502 may further include storage, sharing, and collaboration functionality that may be tightly integrated into the customer front end 402a. The product recommendation 406f may be presented to the customer at appropriate phases or events during an interaction with the system. Examples may include, but are not limited to, additional report modules or a whole company report. The K-Assistance service 412 may provide one or more collaboration features for individual interaction between the registered user 112 and the one or more researchers. The data analytics component 455 may provide quantitative analysis of customer behavior that may require a collection of additional data about an interaction with the system. The data analytics 420b may further be integrated with external software, such as Google Analytics or KISSmetrics, to provide a rich feature set for defining and analyzing metrics.

The K-Space management 424 may include a component, such as report management, which may provide a functionality for file management, including versioning. The document management system is separated from the customer services application.

The portal or toolset application may include a component, such as researcher front end 404b. Back-office features of the K-Base management 428, the K-Engine 304, and the K-Space management 424 may be consolidated within the researcher front end 404b. The researcher front end 404b may not integrate all features provided by a standalone standard application.

The K-Engine 304 may include a plurality of components, such as request processing or (workflows) 214b, template design and management 408b, and report generation 414b. The K-Engine 304 may further include additional components, such as report refinement 512 and template store 514. The request processing or (workflows) 414b may include one or more processes for request execution (including manual and automated activities). Such one or more processes may be implemented by a service process engine. The request order entered by the registered user 112 may trigger the (internal) request execution that may eventually lead to a delivery of the requested K-Product. The template design and management 408b may be the single interface to a persistence component, such as the template store 514 stored in the memory 306. The template design and management 408b may manage used or new customer and standardized report templates as a basis for K-Product creation. The template design and management 408b may require an optimization of K-Product templates for further manual and automated processing. The templates to be used by an automated document generation may include a formal binding to content items from within the K-Base. The report generation 414b may automatically create draft reports based on a report template and data received from the K-Base 308 and from external sources 516 as an input. In an embodiment, part of such data may be received from the external sources 516, via one or more application program interfaces (APIs). The report refinement 512 may denote a manual part of the report generation. The report of the K-Product may be manually finalized and the system may enforce a four-eyes-check before a report is delivered to the customer.

The K-Base management 428 may include a plurality of components such as K-Object management 428a, content integration 428d, and K-Modeling 428b. The K-Base management 428 may provide a plurality of data management functionalities that may be required to create and maintain the K-Base 308. The content integration 428d may be a single interface to a persistence component, such as the K-Base 308. The content integration 428d may provide a way for modelling and entering content and accessing it in an efficient and structured way through queries. The K-Modeling 428b may be configured to transform the external sources 516 with a different structure than the K-Base 308 to be used as additional sources beside the K-Base 308 itself.

The aspects management application may include a plurality of components, such as security management 430 and service support 422. The security management 430 may provide security to all the other components, such that the data stored within the persistence components may be protected. The service support 422 may include a plurality of standard applications.

In operation, the registered user 112 may generate a request order for a desired K-Product, via one or more user interfaces (UIs) provided by the customer front end 402a. The customer front end 402a may further facilitate user account administration of the registered one or more users, including the registered user 112. The request order may comprise details about the requested K-Product and may optionally include a knowledge document template uploaded during the request order process. In an embodiment, the customer front end 402a, in conjunction with the customer account management 406e, may allow a new customer to register a new account and thereafter manage the account details autonomously. The customer front end 402a, via the customer account management 406e, may store user data of the registered user 112 in the customer store 510. The user data may be later on accessed from the customer store 510 and modified by internals and partly the registered user 112. In an embodiment, the registered user 112 may be a customer. In an embodiment, the registered user 112 may be a procurer. In an embodiment, the user data and/or the request order data received via the customer front end 402a, may be communicated to the K-Space services 502. The K-Space services 502 may further transmit the user data and/or the request order data to the K-Space 310. The K-Space 310 may include storage, sharing, and collaboration functionality that may be tightly integrated into the customer front end 402a. The K-Space 310 may be managed by the K-Space management 424. In an embodiment, the product recommendation 406f may recommend one or more K-Products to the registered user 112 at appropriate phases or events during an interaction with the system. The recommendation may be based on the data retrieved from the product store, the customer store, and/or the transaction store. The K-Assistance service 412 may provide one or more collaboration features for individual interaction between the registered user 112 and the one or more researchers via the administration front end 404a. The data analytics 420b may provide quantitative analysis of customer behavior that may require a collection of additional data about an interaction with the system. The data analytics 420b may further be integrated with external software, such as Google Analytics or KISSmetrics, to provide a rich feature set for defining and analyzing metrics. All the communication is performed via the communication and account support 406i.

In an embodiment, the administration front end 404a may provide a dedicated front end to enable a product manager, a store manager, or a researcher to perform back-office tasks for administration and operation of customer services for the request order generated by the registered user 112. The administration front end 404a, in conjunction with the payment 406g, may integrate a plurality of payment providers and may provide a payment functionality to the registered user 112. The registered user 112 may select one or more payment-related options to complete the request order. The selection of the one or more payment options may be communicated to the transaction management 504. The transaction management 504 may further manage temporary session information for the current request order, persistent attributes, and a state of the current request order during the creation of the request order. The transaction management 504 may store such transaction details for the request order and the desired K-Product in the transaction store 508.

In an embodiment, the order management 406a may handle creation of request orders and subsequent processing until the request orders are fulfilled or cancelled. The order management 406a may update the K-Space 310 based on the request orders and subsequent processing. The product management 408a, in conjunction with the order management 406a, may facilitate the product manager to define a structure of the requested K-Product and corresponding pricing. The product management 408a may store such details in the product store.

In an embodiment, the order management 406a may communicate with the request processing or (workflows) 414a to further execute the request order. The one or more researchers may provide one or more preferences, via the researcher front end 404b. In an embodiment, a template designer from the one or more researchers may update one or more templates, template design, and management 408b, based on which the K-Product may be created. The updated template, as a template model, may be stored in the template store 514 in the memory 306. In an embodiment, the template design and management 408b may require an optimization of K-Product templates by the template designer for further manual and automated processing. The report generation 414b, in conjunction with the request processing or (workflows) 414b and the template design and management 408b, may automatically create the desired K-Product, such as draft reports. The K-Products may be created based on the K-Base 308 managed by the K-Base management 428 and/or the content integration 428d. In an embodiment, the K-Modelling, in conjunction with the content integration 428d, may modify the K-Models stored in the K-Base 308. In an embodiment, the K-Modelling may design the K-Models for K-Objects received from the external sources 516. In an embodiment, the report refinement 512 may facilitate the one or more researchers, via the researcher front end 404b, to manually finalize the K-Product before delivery to the registered user 112. The finalized K-Product may be delivered and shared with the registered user 112, via the K-Space 310.

FIG. 6 shows a data architecture 600 of the K-Server 104, in accordance with an embodiment of the disclosure. The data architecture 600 of the K-Server 104 may be implemented in the K-Base 308, the K-Space 310, and the memory 306. The memory may further implement additional stores, such as a product store, a transaction store 508, a template store 514, and a customer store 510. The data architecture 600 of the K-Server 104 may comprise a result model 1100, the K-Model 800, a metadata model 900, a request model 700, a transaction model 1200, a template model 1000, and customer model 1300.

The result model 1100 may be implemented by suitable logic, circuitry, interfaces, and/or code that may be operable to describe the finalized K-Product delivered and shared with the registered user 112. The result model 1100 comprises the delivered and shared K-Product and related metadata. The metadata may be searchable and may be instantiated in the K-Space.

The K-Model 800 may be implemented by suitable logic, circuitry, interfaces, and/or code that may be operable to describe the knowledge associated with one or more K-Objects. For example, for determining a K-Product such as a company profile report, instances of the K-Objects in the K-Model 800 may include, but are not limited to, clients, competitors, financials, industry, organization chart, K-Products and services, description, locations and/or events. The knowledge may be transferred to other models or data stores based on implementation of the Content Management Interoperability Services (CMIS). The K-Model 800 may be instantiated in the K-Base.

The metadata model 900 may be implemented by suitable logic, circuitry, interfaces, and/or code that may be operable to describe meta information about the K-Model 800. In an embodiment, the metadata model 900 may communicate with the K-Model 800. The metadata model 900 may be instantiated in the K-Base 308.

The request model 700 may be implemented by suitable logic, circuitry, interfaces, and/or code that may be operable to describe the request order may be terms of the K-Products desired within a user-defined response time. The request model 700 may comprise a plurality of K-Classes and K-Objects that may describe a request order generated by the registered user. In accordance with various embodiments, the user-defined response time may be a time, such as "ad-hoc," "two hours," "four hours," "12 hours," and "30 hours" provided by the registered user 112 based on the size and content of the K-Product. The user-defined response time may be specified by the registered user 112 as part of the request order. The request model may be instantiated in the transaction store and the K-Space. The request model may be further associated with the K-Product store and may receive knowledge data from the result model and the transaction model. The request model may describe a format of requests that may be utilized by the customer to enter a new request into the system.

The transaction model 1200 may be implemented by suitable logic, circuitry, interfaces, and/or code that may be operable to describe end-to-end transaction for a request order. In an embodiment, the transaction model 1200 may communicate with the request model 700. The transaction model 1200 may be instantiated in the transaction store.

The template model 1000 may be implemented by suitable logic, circuitry, interfaces, and/or code that may be operable to describe one or more templates for the desired K-Product. In an embodiment, the transaction model 1200 may communicate with the K-Model 800. The template model 1000 may be instantiated in the template store.

The customer model 1300 may be implemented by suitable logic, circuitry, interfaces, and/or code that may be operable to describe customer management data. The customer management data may be predefined by the customer management solution. The customer model 1300 may be instantiated in the customer store.

FIG. 7A shows an exemplary K-Class diagram of a request model implemented in a K-Server. With reference to FIG. 7A, there is shown a K-Class diagram 700a of the request model 700 (FIG. 4). The K-Class diagram 700a may comprise a plurality of K-Classes that may describe a request order generated by the registered user 112. With reference to FIG. 7A, there are shown a plurality of K-Classes, such as a first K-Class 702a, a second K-Class 704a, and a third K-Class 706a. Each of the plurality of K-Classes 702a to 706a may be represented by boxes, which may include three portions, such as a first portion, a second portion, and a third portion.

The first portions of the plurality of K-Classes 702a to 706a may comprise class names, such as "Customer Request," "Requestor Details," and "Options." The second portions of the plurality of K-Classes 702a to 706a may comprise attribute data types (corresponding to each attribute) of each of the plurality of K-Classes 702a to 706a. Examples of the attributes and attribute data types of the first K-Class 702a may comprise "title: Text", "driver: Text," "expectedDelivery: Date/Time," "type: Enumeration," "priority: Enumeration," and "reportTemplate: Enumeration". Examples of the attributes of the class name, "Requestor Details," may include "requestor: Text," "officeLocation: Text," "sector: Enumeration," "region: Enumeration," and "industry: Enumeration." Examples of the attributes and attribute data types of the second K-Class 704a may include "name: Text." The third portions of the plurality of K-Classes 702a to 706a may comprise methods that each of the plurality of K-Classes may execute. With reference to FIG. 7A, the third portions of the plurality of K-Classes 702a to 706a may be blank.

With reference to FIG. 7A, the first K-Class 702a, the second K-Class 704a, and the third K-Class 706a may be grouped together as the request model 700. In an embodiment, the plurality of K-Classes may be split into a number of sub-classes for detailed request modelling. The relationships between two or more classes may be unidirectional associations, represented by a solid line with an open arrowhead. At the starting end of the solid line, there may be shown a role name, such as "requestor," "options," and "sub-options". There may be further shown a multiplicity value, such as "1..*" for one or more, "1" for one only, and "0..*" for zero or more.

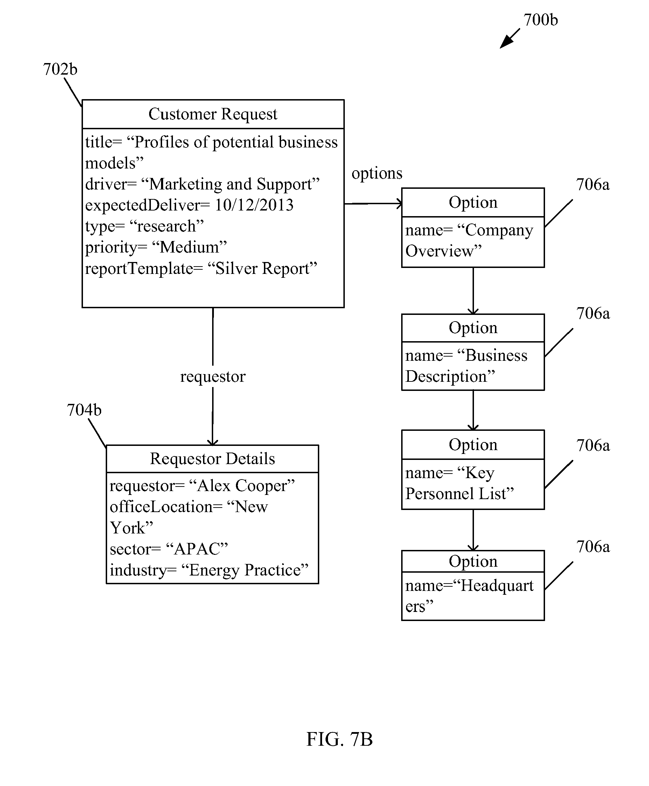

FIG. 7B shows an exemplary K-Object diagram of a request model implemented in a K-Server. With reference to FIG. 7B, there is shown a K-Object diagram 700b for the K-Class diagram 700a. The K-Object diagram 700b may correspond to run-time entities of the K-Class diagram 700a (FIG. 7A). With reference to FIG. 7B, there are shown a plurality of K-Objects, such as a first K-Object 702b, a second K-Object 704b, and a third K-Object 706b. For such a K-Product, the K-Object diagram 700b may comprise a plurality of K-Objects 702b to 706b that may correspond to a plurality of run-time entities of respective K-Class from the plurality of K-Classes 702a to 706a. Each of the plurality of K-Objects 702b to 706b are represented by boxes that may include three portions.

The first portions of the plurality of K-Objects 702b to 706b may comprise object names of each of the plurality of K-Objects 702b to 706b. Examples of the K-Object names may include, but are not limited to, ": Customer Request," ": Requestor Details," and ": Option." The second portions of the plurality of K-Objects 702b to 706b may comprise attributes and attribute values (corresponding to each attribute) of each of the plurality of K-Objects 702b to 706b. For example, attributes of the object name ": Customer Request" may comprise "title= Profiles of potential business models," "driver= Marketing and Support", "expectedDelivery= 10/12/2014," "type= Research," "priority= Medium," and "reportTemplate= Silver Report." Examples of the attributes of the object name ": Requestor Details" may include "requestor= Alex Cooper," "officeLocation= New York," "sector= APAC", and "industry= Energy Practice." Examples of the attributes of the object name ": Option" may include "name= Company Overview." There may be multiple instances of the object name ": Option" that may comprise different attribute names such as "Business Description," "Key Personnel List," and "Headquarters." The third portions of the plurality of K-Objects 702b to 706b may comprise methods that each of the plurality of K-Classes 702a to 706a may execute. With reference to FIG. 7B, the third portions of the plurality of K-Objects 702b to 706b may be blank.

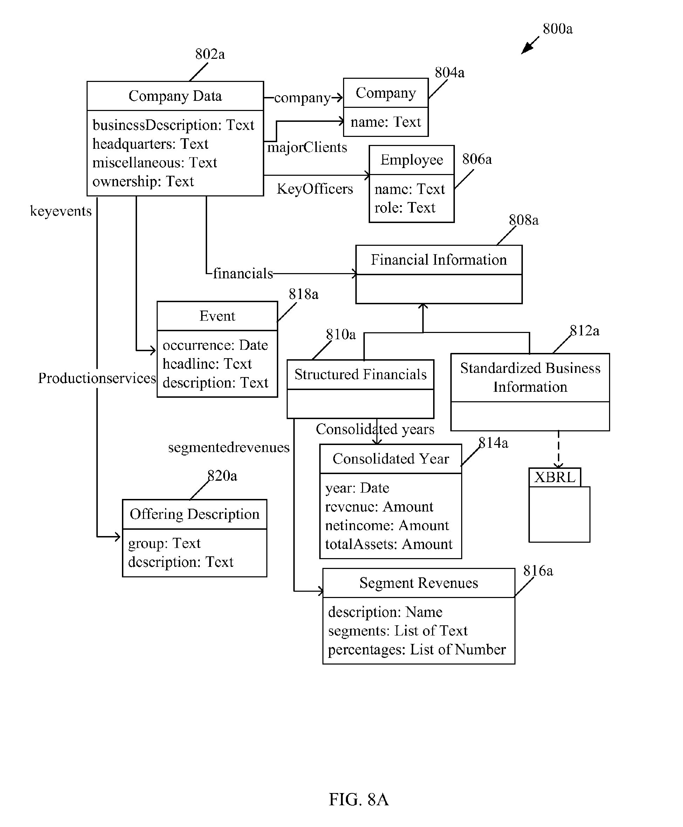

FIG. 8A shows an exemplary K-Class diagram of a K-Model implemented in a K-Server. With reference to FIG. 8A, there is shown a K-Class diagram of a K-Model 800 (FIG. 4). The K-Class diagram 800a of the K-Model 800 may comprise a structured representation of the requested K-Product, such as a report, which may store data, information, and knowledge.

With reference to FIG. 8A, the K-Model 800 may correspond to a request order for a K-Product, such as a company profile report. For such a K-Product, the K-Model 800 may comprise a plurality of K-Classes 802a to 820a. The first portions of the plurality of K-Classes 802a to 820a may include class names, such as "Company Data," "Company," "Employee," "Financial Information," "Event," "Offering Description," "Structured Financials," "Standardized Service Information," "Segment Revenues," and "Consolidated Year," respectively. The second portions of the plurality of K-Classes 802a to 820a may comprise attributes and attribute data types. For example, for the K-Class 802a, the second portion may comprise attributes and attribute data types such as "businessDescription: Text," "headquarters: Text," "miscellaneous: Text," and "ownership: Text." For the K-Class 802a, the second portion may comprise attributes and attribute data types, such as "name: Text." For the K-Class 806a, the second portion may comprise attributes and attribute data types, such as "name: Text" and "role: Text." For the K-Classes 808a to 812a, the second portions may be blank. For the K-Class 814a, the second portion may comprise attributes and attribute data types, such as "year: Date," "revenue: Amount," "netincome: Amount," and "totalAssets: Amount." For the K-Class 816a, the second portion may comprise attributes and attribute data types, such as "description: Name," "segments: List of Text," and "percentages: List of NumberOffering." For the K-Class 818a, the second portion may comprise attributes and attribute data types, such as "Eventoccurrence: Date," "headline: Text," and "description: Text." For the K-Class 820a, the second portion may comprise attributes and attribute data types, such as "group: Text" and "description: Text."

With reference to FIG. 8A, the K-Model 800 that corresponds to the request order for the company profile report may further comprise a K-Template, such as a powerpoint (PPT) template or an Excel template. Based on the template selected by the user as one or more user preferences, the K-Model 800 may arrange the knowledge corresponding to the determined K-Product. Such an arrangement of knowledge may be displayed on the display screen 108 to provide the registered user 112 with required company insights.

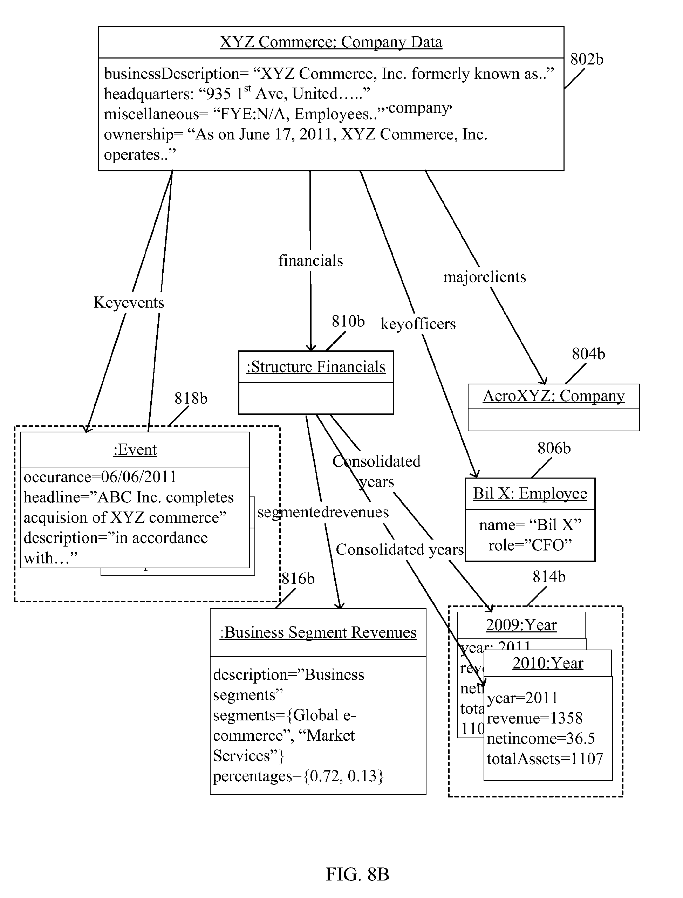

FIG. 8B shows an exemplary K-Object diagram of a K-Model implemented in a K-Server. With reference to FIG. 8B, there is shown a K-Object diagram 800b for the K-Class diagram 800a. The K-Object diagram 800b may correspond to run-time entities of the K-Class diagram 800a (FIG. 8A). With reference to FIG. 8B, there are shown a plurality of K-Objects 802b to 820b that may correspond to the plurality of K-Classes 802a to 820a. For such a K-Product, the K-Object diagram 800b may comprise a plurality of K-Objects 802b to 820b that may correspond to a plurality of run-time entities of the respective K-Class from the plurality of K-Classes 802a to 820a. Each of the plurality of K-Objects 802b to 820b may be represented by boxes that may include three portions.

The first portions of the plurality of K-Objects 802b to 820b may comprise object names of each of the plurality of K-Objects 802b to 820b. Examples of the K-Object names may include, but are not limited to, "XYZ Commerce: Company data," "AeroXYZ: Company," "Bil X: Employee," ": Financial Information," ": Structured Financials," ": Standardized Business Information," "2010: Year, 2009: Year," ": Business Segment Revenues," ": Event," and ": Offering Description," respectively. The second portions of the plurality of K-Objects 802b to 820b may comprise attributes and attribute values (corresponding to each attribute) of each of the plurality of K-Objects 802b to 820b, as shown in FIG. 8B. It may be appreciated by those ordinary skilled in the art that the association between the K-Objects 802b to 820b may be similar to the association between the K-Classes 802a to 820a.

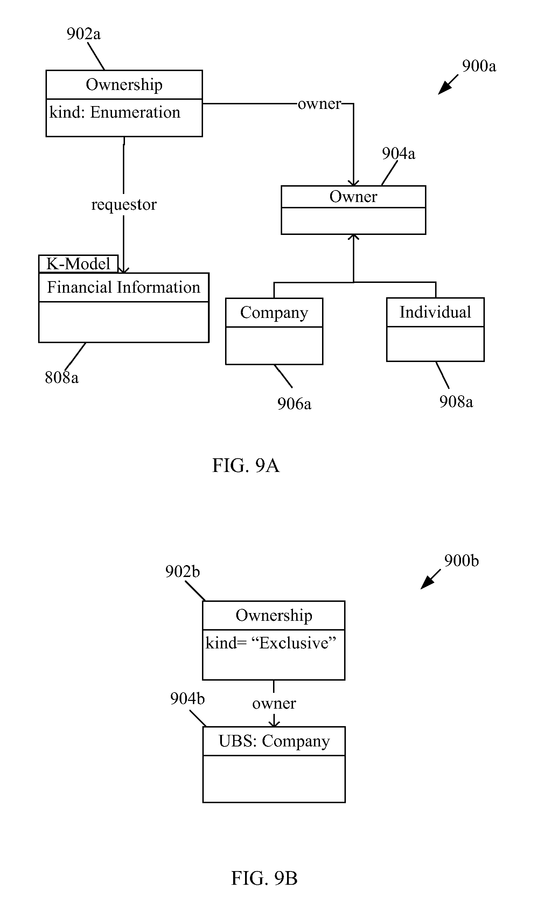

FIG. 9A shows an exemplary K-Class diagram of a metadata model implemented in a K-Server, in accordance with an embodiment of the disclosure. With reference to FIG. 9A, there is shown a K-Class diagram 900a of the metadata model 900 (FIG. 4). The K-Class diagram 900a may comprise a plurality of K-Classes that may represent a structured representation of data and/or knowledge of the K-Model 800 (FIG. 8).

With reference to FIG. 9A, the K-Class diagram 900a may comprise a plurality of K-classes interrelated with the pluralities of K-Objects in the K-Model 800. The K-Model 800 may correspond to the request order for the K-Product, such as a company profile report. For such a K-Product, the K-Class diagram 900a of the metadata model 900 may comprise a plurality of K-Classes 902a to 908a. There is further shown a plurality of first portions plurality of K-Classes 902a to 908a that may include K-Class names of each of the plurality of K-Classes 902a to 908a. Examples of the K-Class names may include, but are not limited to, "Ownership," "Owner," "Company," and "Individual." There is further shown a plurality of second portions of the plurality of K-Classes 902a to 908a that may include attributes and attribute data types of each of the plurality of K-Classes 902a to 908a. For example, for the K-Class 902a, the second portion may comprise attributes and attribute data types, such as "Kind: Enumeration." There may be a unidirectional association of the K-Class 902a, as a subject, with the K-Class 908a of the K-Model 800. Further, there may be a unidirectional association of the K-Class 902a as an owner with the K-Class 904a. Further, there may be a unidirectional association between the K-Class 906a and the K-Class 908a with the K-Class 904a.

FIG. 9B shows an exemplary K-Object diagram of a metadata model implemented in a K-Server, in accordance with an embodiment of the disclosure. With reference to FIG. 9B, there is shown a K-Object diagram 900b that corresponds to a run-time entity of the K-Class diagram 900a, as illustrated in FIG. 9A. The K-Object diagram 900b may correspond to the request order for the K-Product, such as the company profile report. For such a K-Product, the K-Object diagram 900b may comprise a plurality of K-Objects 902b to 908b that may correspond to a plurality of run-time entities of the respective K-Class from the plurality of K-Classes 902a to 902b. There is further shown a plurality of first portions of the plurality of K-Classes 902a to 908a that may include K-Object names of each of the plurality of K-Objects 902b to 908b. Examples of the K-Object names may include, but are not limited to, ": Ownership," ": Owner," ": Company," and ": Individual." There is further shown a plurality of second portions of the plurality of K-Classes 902a to 908a that may include K-Object attribute names and attribute values of each of the plurality of K-Objects 902b to 908b. Examples of the K-Object attribute and attribute name for the K-Object 902b may include "Kind: Exclusive."

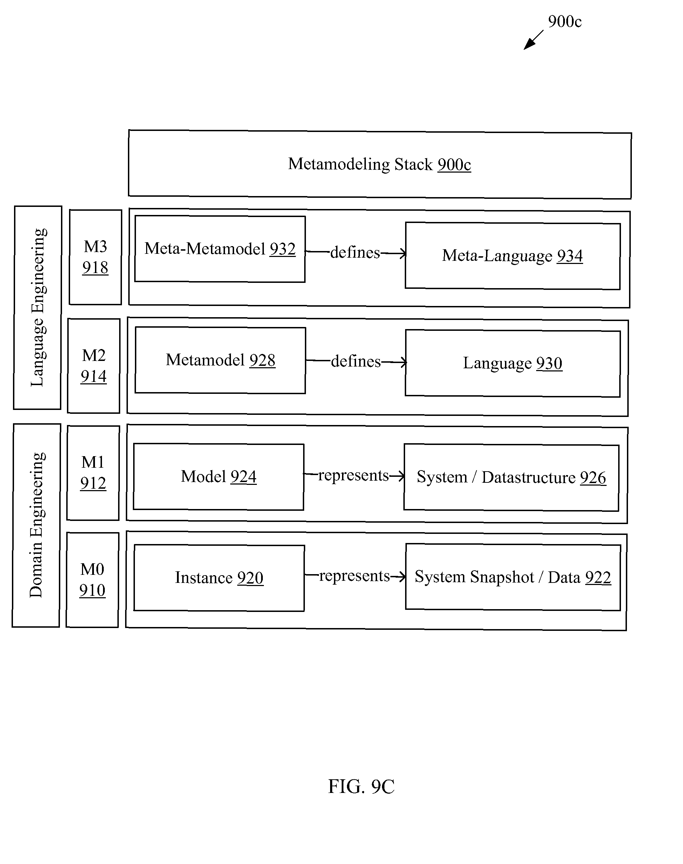

FIG. 9C shows an exemplary meta-modelling stack implemented in a K-Server, in accordance with the present disclosure. With reference to FIG. 9C, there is shown an exemplary meta-modelling stack 900c in the K-Server 104 as a four-layer meta-modelling stack. The four layers may comprise a first layer 910, "M0," as a base layer. A second layer 912, "M1," a third layer 914, "M2," and a fourth layer 916, "M3," may be the next subsequent layers. The first layer 910, "M0," may be an information layer that may comprise a knowledge instance 920 as a basic building block. The knowledge instance 920 may represent a system snapshot and/or knowledge data 922. Examples of the first layer 910, "M0," may include, but are not limited to, the K-Base, and financial data of ABBTM.

The second layer 912, "M1", may be a K-Model layer 924 that may comprise knowledge metadata that describes the knowledge data in the first layer 910, "M0." The metadata may be informally aggregated as models. The K-Model may represent a system and/or knowledge data structure 926. Examples of the second layer 912, "M1," may include, but are not limited to, the Alfresco content model, the K-Model, and/or an extensible Business Reporting Language (XBRL).

The third layer 914, "M2," may be a knowledge metamodel layer 928 that may comprise descriptions, such as meta-metadata, to define a structure and semantics of the knowledge metadata. The knowledge metadata may define a language 930. Examples of the third layer 914, "M2," may include, but are not limited to, an Alfresco content model and/or Unified Modelling Language (UML).

The fourth layer 916, "M3," may be a knowledge meta-metamodel layer 932 that may comprise structure and semantics of the knowledge meta-metadata. The knowledge meta-metamodel may define a meta-language 934. Examples of the fourth layer "M3" may include, but are not limited to, an Ecore tool and/or a Meta Object Facility (MOF).

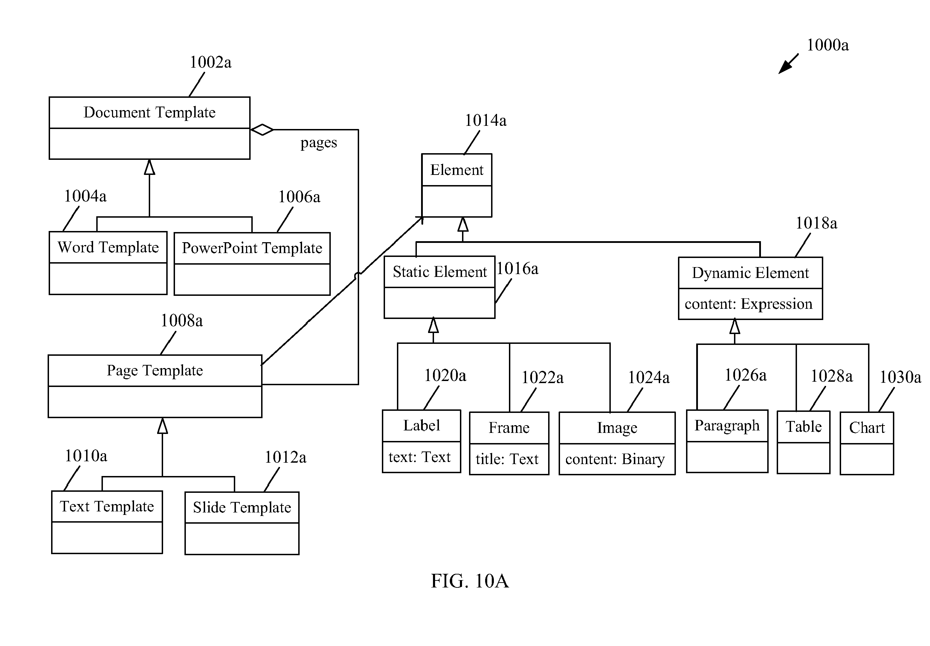

FIG. 10A shows an exemplary K-Class diagram of a template model implemented in a K-Server, in accordance with an embodiment of the disclosure. With reference to FIG. 10A, there is shown a K-Class diagram 1000a of the Template model 1000 (FIG. 4). The K-Class diagram 1000a may comprise a structured representation that may describe a layout, mapping, and binding of K-Classes for the K-Product.

With reference to FIG. 10A, the K-Class diagram 1000A for the template model 1000 may correspond to a request order for the K-Product, such as a company profile report. For such a K-Product, the template model 1000 may comprise a plurality of K-Classes 1002a to 1030a. The first portions of the plurality of K-Classes 1002a to 1030a may include class names, such as "Document Template," "Word Template," "Powerpoint Template," "Page Template," "Text Template," "Slide Template," "Element," "Static Element," "Dynamic Element," "Label," "Frame," "Image," "Table," and "Chart." The second portions of the plurality of K-Classes 1002a to 1030a may comprise attributes and attribute data types. For example, for the K-Class 1018a, the second portion may comprise attributes and attribute data types, such as "content: Expression," and for the K-Class 1024a, the second portion may comprise attributes and attribute data types, such as "content: Binary."

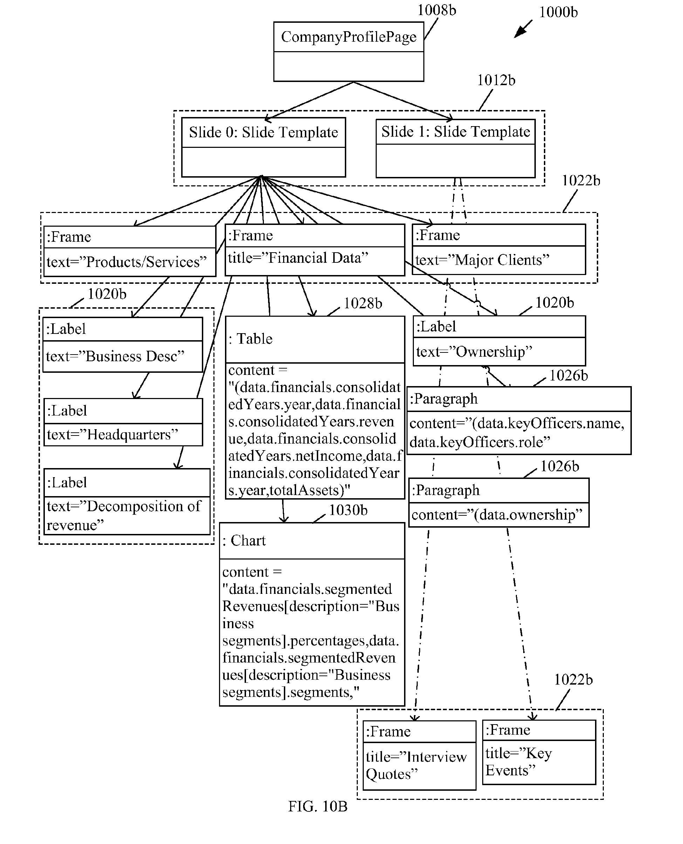

FIG. 10B shows an exemplary K-Object diagram of a template model implemented in a K-Server, in accordance with an embodiment of the disclosure. With reference to FIG. 10B, there is shown a K-Object diagram 1000b for the K-Class diagram 1000a. The K-Object diagram 1000b may correspond to run-time entities of the K-Class diagram 1000a (FIG. 10A). With reference to FIG. 10B, there are shown a plurality of K-Objects 1002b to 1030b that may correspond to the plurality of K-Classes 1002a to 1030a. For such a K-Product, the K-Object diagram 1000b may comprise a plurality of K-Objects 1002b to 1030b that may correspond to a plurality of run-time entities of the respective K-Class from the plurality of K-Classes 1002a to 1030a. Each of the plurality of K-Objects 1002b to 1030b may be represented by boxes that may include three portions.

The first portions of the plurality of K-Objects 1002b to 1030b may comprise object names of each of the plurality of K-Objects 1002b to 1030b. In an exemplary scenario, the K-Object 1002b may be "CompanyProfilePage: Presentation Template," two instances of the K-Object 1012b may be "Slide 0: Slide Template" and "Slide1: Slide Template." There may be three instances of the K-Object 1012b, with attribute values "title= Financial Data," "text= Major Clients," and "text= Products/services," associated with the K-Object 1012b, "Slide 0: Slide Template". Further there may be two instances of the K-Object 1012b, with attribute values "title= Key Events" and "title= Interview Quotes" associated with the K-Object 1012b, "Slide 1: Slide Template". Further, there may be three instances of the K-Object 1020b, with attribute values "text= Business Desc," "text= Ownership," and "text= Headquarters" associated with the K-Object 1012b, "Slide 0: Slide Template". Similarly, there may be one instance of the K-Object 1020b, with attribute value "text: Decomposition of Revenue" associated with the K-Object 1012b, "Slide 0: Slide Template". It may be appreciated by those ordinary skilled in the art that the association between the K-Objects 1002b to 1030b may be similar to the association between the K-Classes 1002a to 1030a (FIG. 10A).

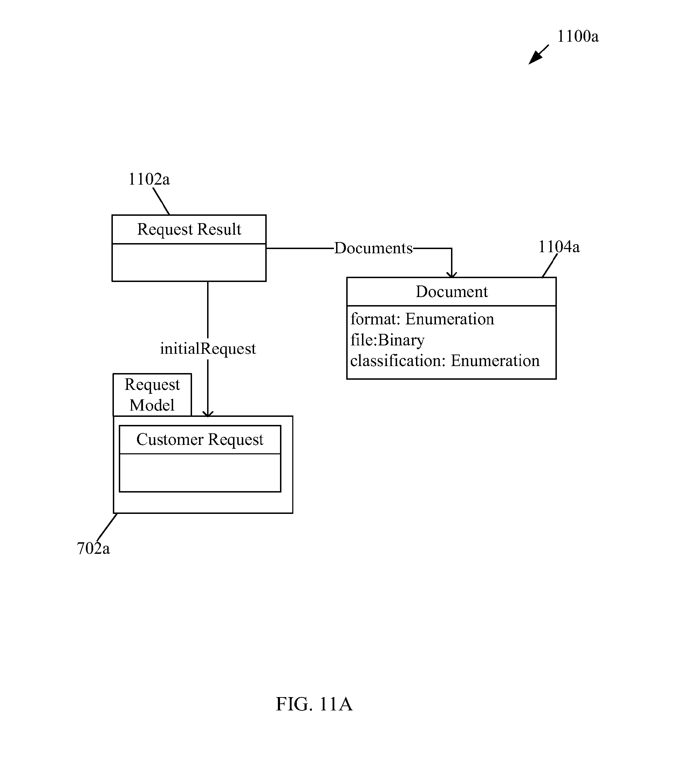

FIG. 11A shows an exemplary K-Class diagram of a Result Model implemented in a K-Server, in accordance with an embodiment of the disclosure. With reference to FIG. 11A, there is shown a K-Class diagram 1100a of the result model 1100 (FIG. 4). The K-Class diagram 1100a may comprise a structured representation of a result for the requested K-Product, such as a company profile report, stored in the K-Space. The K-Class diagram 1100a for the result model 1100 may further include metadata about the K-Product required for further processing, such as a tag-based search or classification-based search.

With reference to FIG. 11A, the K-Class diagram 1100a may correspond to a plurality of K-Classes 1102a and 1104a. The first portions of the plurality of K-Classes 1102a and 1104a may include class names, such as "Request Result" and "Document." The second portions of the plurality of K-Classes 1102a to 1104a may comprise attributes and attribute data types. For example, for the K-Class 1104a, the second portion may comprise attributes and attribute data types, such as "format: Enumeration," "file: Binary," and "classification: Enumeration." In an embodiment, the K-Class 1102a may be associated with the K-Class 502a of the K-Class diagram 500a.

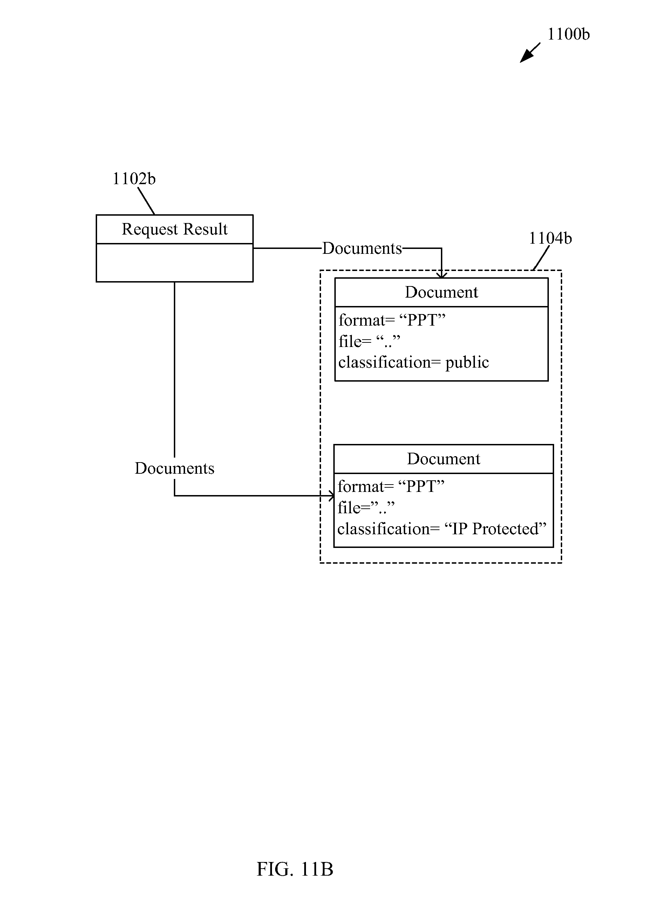

FIG. 11B shows an exemplary K-Object diagram of a result model implemented in a K-Server, in accordance with an embodiment of the disclosure. With reference to FIG. 11B, there is shown a K-Object diagram 1100b for the K-Class diagram 1100a. The K-Object diagram 1100b may correspond to run-time entities of the K-Class diagram 1100a (FIG. 11A). With reference to FIG. 11B, there are shown a plurality of K-Objects 1102b and 1104b that may correspond to the plurality of K-Classes 1102a and 1104a. For such a K-Product, the K-Object diagram 1100b may comprise a plurality of K-Objects 1102b and 1104b that may correspond to a plurality of run-time entities of respective K-Class from the plurality of K-Classes 1102a and 1104a. Each of the plurality of K-Objects 1102b and 1104b may be represented by boxes that may include three portions.

The first portions of the plurality of K-Objects 1102b and 1104b may comprise object names of each of the plurality of K-Objects 1102b and 1104b. In an exemplary scenario, there may be two instances of the K-Object 1104b. The first portion of the two instances of the K-Object 1104b. The second portions of the plurality of K-Objects 1102b and 1104b may comprise attribute names and attribute values of each of the plurality of K-Objects 1102b and 1104b. For example, for the first instance of the K-Object 1104b, the second portion may comprise "format: PPT," "file: ..," and "classification: public." For the second instance of the K-Object 1104b, the second portion may comprise "format: PPT," file: ..," and "classification: IP Protected."

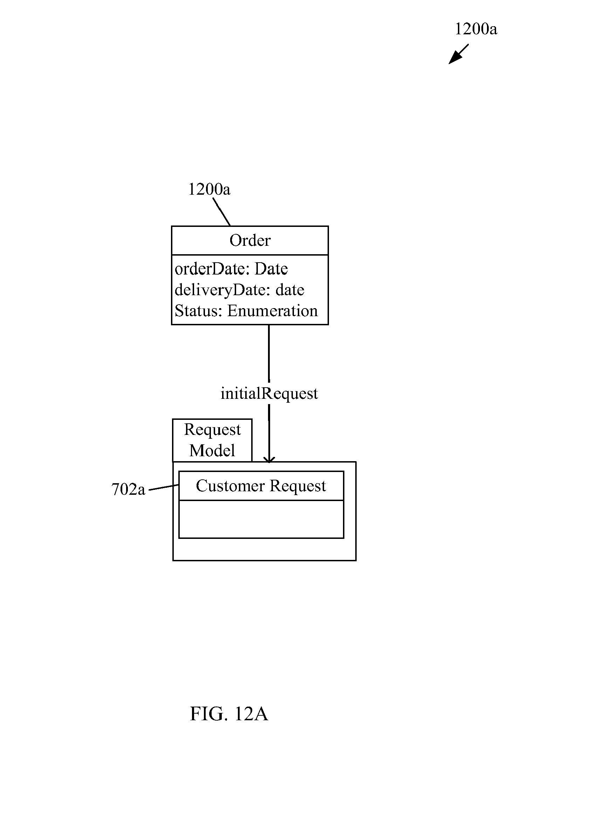

FIG. 12A shows an exemplary K-Class diagram of a transaction model implemented in a K-Server, in accordance with an embodiment of the disclosure. With reference to FIG. 12A, there is shown a K-Class diagram 1200a of the transaction model 1200 (FIG. 4). The K-Class diagram 1200a may comprise a structured representation of data generated by an order process within a customer services application.

With reference to FIG. 12A, the K-Class diagram 1200a may comprise a K-Class 1202a. The first portion of the K-Class 1202a may include a class name, such as "Order." The second portion of the K-Class 1202a may comprise attributes and attribute data types. For example, for the K-Class 1202a, the second portion may comprise attributes and attribute data types, such as "orderDate: Date," "deliveryDate: Date," and "status: Enumeration." In an embodiment, The K-Class 1202a may be associated with the K-Class 502a of the K-Class diagram 500a.

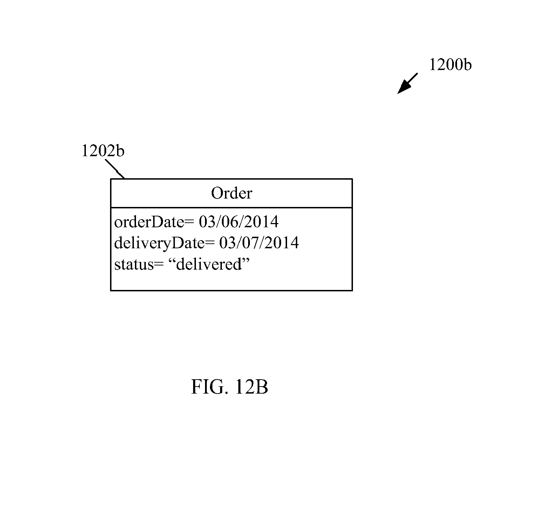

FIG. 12B shows an exemplary K-Object diagram of a Transaction Model implemented in a K-Server, in accordance with an embodiment of the disclosure. With reference to FIG. 12B, there is shown a K-Object diagram 1200b for the K-Class diagram 1200a. The K-Object diagram 1200b may correspond to a run-time entity of the K-Class diagram 1200a (FIG. 12A). With reference to FIG. 12B, there is shown a K-Object 1202b that may correspond to the K-Class 1202a. For such a K-Product, the K-Object diagram 1200b may comprise the K-Objects 1202b that may correspond to a run-time entity of the K-Class 1202a. The K-Object 1202b may be represented by a box that may include three portions.

The first portion of the K-Object 1202b may comprise an object name, such as ": Order." The second portion of the K-Objects 1202b may comprise attribute names and attribute values, such as "orderDate= 03/06/2014," "deliveryDate= 03/07/2014," and "status= Delivered."

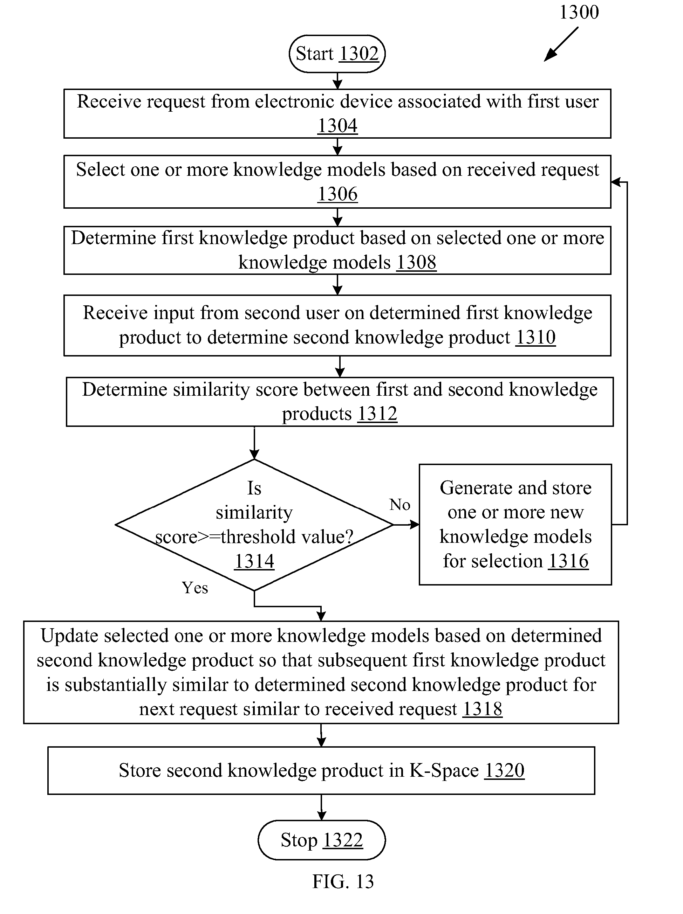

FIG. 13 a flowchart that illustrates an exemplary method for providing an online K-Product, in accordance with an embodiment of the disclosure. With reference to FIG. 13, there is shown a flowchart 1300. The flowchart 1300 is described in conjunction with FIGs. 1 to 12B. The method starts at step 1302 and proceeds to step 1304.

At step 1304, a request may be received from the electronic device 102 associated with a first user, such as the registered user 112. The request may comprise a request order and one or more user preferences. At step 1306, one or more knowledge models, such as the K-Models, may be selected from one or more pre-stored knowledge models based on the received request. The one or more pre-stored knowledge models may be generated based on the one or more previous requests. The one or more previous requests may be similar to at least a portion of the received request.

At step 1308, a first knowledge product, such as a K-Product, may be determined based on the selected one or more knowledge models. At step 1310, an input may be received from a second user, such as one or more researchers, on the determined first knowledge product to determine a second knowledge product.

At step 1312, the similarity score between the determined first knowledge product and the determined second knowledge product may be determined. At step 1314, the determined similarity score may be compared with a predetermined threshold value. In an instance when the similarity score is less than the predetermined threshold value, the control passes to step 1316. At step 1316, when the similarity score is less than the predetermined threshold value, the one or more new K-Models are generated and stored. Control then passes back to step 1306.

In an instance when the similarity score is greater than or equal to the predetermined threshold value, the control passes to step 1318. At step 1318, the selected one or more K-Models may be updated based on the determined second K-Product so that a subsequent first K-Product is substantially similar to the determined second K-Product for a next request similar to the received request. In an embodiment, the selected one or more K-Models may be updated such that the similarity score increases for every subsequent request. In an embodiment, the one or more K-Models may be updated based on machine learning of knowledge that corresponds to historic requests. At step 1320, the determined second K-Product may be stored in a knowledge space, such as the K-Space 310. The control passes to end step 1322.

In accordance with an embodiment of the disclosure, a system for providing an online knowledge product is disclosed. The system, implemented in the K-Server 104 (FIG. 1), may be communicatively coupled to the electronic device 102 (FIG. 1). The system may comprise one or more processors, such as the processor 302, operable to receive a request from the electronic device 102 associated with a first user, such as the registered user 112 (FIG. 1). The request may comprise a request order and one or more user preferences. One or more knowledge models, such as the K-Models, may be selected from one or more pre-stored knowledge models based on the received request. The one or more pre-stored knowledge models may be generated based on one or more previous requests. The one or more previous requests may be similar to at least a portion of the received request. The processor 302 may further determine a first knowledge product based on the selected one or more knowledge models. An input from a second user, such as the one or more researchers, on the determined first knowledge product may be received to determine a second knowledge product. The selected one or more knowledge models may be updated based on the determined second knowledge product so that a subsequent first knowledge product is substantially similar to the determined second knowledge product for a next request similar to the received request.

Various embodiments of the disclosure may provide a non-transitory computer-readable medium and/or storage medium, and/or a non-transitory machine readable medium and/or storage medium having stored thereon, a set of computer-executable instructions for causing a machine and/or a computer for providing an online knowledge product is disclosed. The at least one code section in the K-Server 104 may cause the machine and/or computer to perform the steps that comprise receipt of a request from the electronic device 102 associated with the registered user 112. The request may comprise a request order and one or more user preferences. One or more knowledge models, such as the K-Models, may be selected from one or more pre-stored knowledge models based on the received request. The one or more pre-stored knowledge models may be generated based on one or more previous requests. The one or more previous requests may be similar to at least a portion of the received request. Based on the selected one or more knowledge models, a first knowledge product may be determined. An input from a second user, such as the one or more researchers, on the determined first knowledge product may be received to determine a second knowledge product. The selected one or more knowledge models may be updated based on the determined second knowledge product so that a subsequent first knowledge product is substantially similar to the determined second knowledge product for a next request similar to the received request.

The present disclosure may be realized in hardware or a combination of hardware and software. The present disclosure may be realized in a centralized fashion, in at least one computer system, or in a distributed fashion, where different elements may be spread across several interconnected computer systems. A computer system or other apparatus adapted for carrying out the methods described herein may be suited. A combination of hardware and software may be a general-purpose computer system with a computer program that, when loaded and executed, may control the computer system such that it carries out the methods described herein. The present disclosure may be realized in hardware that comprises a portion of an integrated circuit that also performs other functions.

The present disclosure may also be embedded in a computer program product, which comprises all the features enabling the implementation of the methods described herein, and which when loaded in a computer system is able to carry out these methods. A computer program, in the present context, means any expression, in any language, code, or notation of a set of instructions intended to cause a system having an information processing capability to perform a particular function either directly or after either or both of the following: a) conversion to another language, code or notation and b) reproduction in a different material form.

While the present disclosure has been described with reference to certain embodiments, it will be understood by those skilled in the art that various changes may be made and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular embodiment disclosed, but that the present disclosure will include all embodiments falling within the scope of the appended claims.

## Claims

1. A system for providing an online knowledge product, said system comprising:
in a server communicatively coupled to an electronic device, said system comprising one or more processors operable to:
receive a request from said electronic device associated with a first user, wherein said request comprises a request order and one or more user preferences;
select one or more knowledge models from one or more pre-stored knowledge models based on said received request, wherein said one or more pre-stored knowledge models are generated based on one or more previous requests, wherein said one or more previous requests are similar to at least a portion of said received request;
determine a first knowledge product based on said selected one or more knowledge models;
receive an input from a second user on said determined first knowledge product to determine a second knowledge product; and
update said selected one or more knowledge models based on said determined second knowledge product so that a subsequent first knowledge product is substantially similar to said determined second knowledge product for a next request similar to said received request.

2. A method for providing an online knowledge product, said method comprising:
in a server communicatively coupled to an electronic device:
receiving a request from said electronic device associated with a first user, wherein said request comprises a request order and one or more user preferences;
selecting one or more knowledge models from one or more pre-stored knowledge models based on said received request, wherein said one or more pre-stored knowledge models are generated based on one or more previous requests, wherein said one or more previous requests are similar to at least a portion of said received request;
determining a first knowledge product based on said selected one or more knowledge models;
receiving an input from a second user on said determined first knowledge product to determine a second knowledge product; and
updating said selected one or more knowledge models based on said determined second knowledge product so that a subsequent first knowledge product is substantially similar to said determined second knowledge product for a next request similar to said received request.

3. The system according to claim 1, wherein said one or more processors are operable to determine a similarity score between said determined first knowledge product and said determined second knowledge product; or
the method according to claim 2, further comprising determining a similarity score between said determined first knowledge product and said determined second knowledge product.

4. The system according to claim 3, wherein said one or more processors are operable to update said selected one or more knowledge models such that said similarity score increases for every subsequent request; or
the method of claim 3, further comprising updating said selected one or more knowledge models such that said similarity score increases for every subsequent request.

5. The system according to claim 3, wherein said one or more processors are operable to generate new one or more knowledge models for said selection when said determined similarity score is less than a predetermined threshold value; or
the method of claim 3, further comprising generating new one or more knowledge models for said selection when said determined similarity score is less than a predetermined threshold value.

6. The system according to claim 3, wherein said one or more processors are operable to perform said update of said selected one or more knowledge models is when said determined similarity score is greater than or equal to a predetermined threshold value; or
the method of claim 3, wherein said update of said selected one or more knowledge models is updated when said determined similarity score is greater than or equal to a predetermined threshold value.

7. The system according to claim 1, wherein said update of said selected one or more knowledge models is based on machine learning of knowledge that corresponds to historic requests; or
the method of claim 2, wherein said update of one or more knowledge models is based on machine learning of knowledge that corresponds to historic requests.

8. The system according to claim 1, wherein said update of said selected one or more knowledge models comprises modification of one or more of: content of a knowledge class and/or a knowledge object, a structure of said knowledge class and/or said knowledge object, association between two or more knowledge classes, and/or association between two or more knowledge objects; or
the system according to claim 1, wherein said request corresponds to a user-specified functional service and one or more user preferences for said user specified functional service.

9. The system according to claim 8, wherein:-
(i) said one or more user preferences for said company profile report correspond to one or more of: estimated delivery time, executive summary, company overview, financials, key developments, SWOT analysis, company strategy, industry analysis, and/or a payment option; or
(ii) said first knowledge product and/or said second knowledge product comprises a report related to the user-defined functional service, wherein said user-specified functional service corresponds to legal sector, energy and natural resources sector, consulting/advisory sector, banking and financial services sector, business development sector, telecom, media and technology sector, infographics sector, transportation and logistics sector, industrial goods sector, real estate sector, and market intelligence sector.

10. The system according to claim 9, part (ii), wherein said report is one or more of: a business insight report, a company profile report, an industry profile report, an executive profile report, and/or a business question.

11. The system according to claim 10, wherein:-
(i) said one or more user preferences for said executive report correspond to one or more of: estimated delivery time, executive summary, current role, previous experience and education, awards and recognition, recent speaking engagements, company snapshot, memberships, additional information, and/or a payment option; or
(ii) said one or more user preferences for said industry profile report correspond to one or more of: estimated delivery time, executive summary, sector overview, market size and growth, segments, competitive landscape, key issues and trends, sector outlook, key player profiles, and/or a payment option.

12. The system according to claim 1, wherein an estimated delivery time of said determined first knowledge product and/or said determined second knowledge product is based on a report size selected by said first user.

13. The system according to claim 1, wherein:-
(i) said determination of said first knowledge product and/or said second knowledge product is based on a user profile and a usage pattern of said first user; or
(ii) said first knowledge product and/or said second knowledge product is shared with said first user in a best practice format and a user-specified template using an online secure knowledge space; or
(iii) said one or more processors are operable to share said first knowledge product and/or said second knowledge product with said first user via an online secure knowledge space.

14. The system according to claim 13, part (iii), wherein said shared said first knowledge product and/or said second knowledge product is in an organization-preferred format and a user-specified template; or
wherein said online secure knowledge space is a personalized cloud-based memory space that supports a collaboration platform, and optionally or preferably wherein said collaboration platform facilitates in creation of a personalized workspace for said first user, sharing of said first knowledge product and/or said second knowledge product with one or more other users, and social interaction of said first user with said one or more other users.

15. The system according to claim 1, wherein said one or more processors are further operable to provide a knowledge assistance service to said first user for one or more add-on services, and optionally or preferably wherein said one or more add-on services correspond to formatting and/or modification of said determined said first knowledge product and/or said determined said second knowledge product.

16. The system according to claim 1, wherein said input is provided by said second user for refinement, quality check and advanced analysis of said determined said first knowledge product.

17. A non-transitory computer-readable storage medium having stored thereon, a computer program having at least one code section for providing an online knowledge product, said at least one code section being executable by a computer for causing said computer to perform steps comprising:
receiving, by a server, a request from said electronic device associated with a first user, wherein said request comprises a request order and one or more user preferences;
selecting, by said server, one or more knowledge models from one or more pre-stored knowledge models based on said received request, wherein said one or more pre-stored knowledge models are generated based on one or more previous requests, wherein said one or more previous requests are similar to at least a portion of said received request;
determining, by said server, a first knowledge product based on said selected one or more knowledge models;
receiving, by said server, an input from a second user on said determined first knowledge product to determine a second knowledge product; and
updating, by said server, said selected one or more knowledge models based on said determined second knowledge product so that a subsequent first knowledge product is substantially similar to said determined second knowledge product for a next request similar to said received request.
